Europäisches Patentamt

European Patent Office

Office européen des brevets

(11) Veröffentlichungsnummer : **0 078 436**
**B1**

# EUROPÄISCHE PATENTSCHRIFT

(45) Veröffentlichungstag der Patentschrift :
**30.01.85**

(21) Anmeldenummer : **82109596.5**

(22) Anmeldetag : **18.10.82**

(51) Int. Cl.⁴ : **C 09 K   3/00**, C 07 C  87/02,
C 07 C  91/02, C 08 G  18/32

(54) **Nichtkristalline Polyamin/Kohlensäuresalz-Kompositionen, ein Verfahren zu ihrer Herstellung und ihre Verwendung zur Herstellung von Polyurethanharnstoffen, speziell geschäumten Beschichtungen.** .

(30) Priorität : **31.10.81 DE 3143253**

(43) Veröffentlichungstag der Anmeldung :
**11.05.83 Patentblatt 83/19**

(45) Bekanntmachung des Hinweises auf die Patenterteilung : **30.01.85 Patentblatt 85/05**

(84) Benannte Vertragsstaaten :
**BE CH DE FR GB IT LI NL**

(56) Entgegenhaltungen :
**CH-A-   519 464**
**DE-C-   838 217**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Am Wolfskaul 10**
**D-5000 Köln 80 (DE)**
Erfinder : **Thoma, Wilhelm, Dr.**
**Birkenweg 25**
**D-5090 Leverkusen 31 (DE)**
Erfinder : **Schmitz, Anton**
**Lützenkirchener Strasse 92**
**D-5090 Leverkusen 3 (DE)**

EP 0 078 436 B1

Jouve, 18, rue St-Denis, 75001 Paris, France

**0 078 436**

**Beschreibung**

Die Erfindung betrifft neue, flüssige oder fließfähige Polyamin/Kohlensäuresalz-Kompositionen ohne kristalline Anteile und ihre Herstellung aus Gemischen, die mindestens ein aliphatisches oder cycloaliphatisches Polyamin, ein aliphatisches oder cycloaliphatisches Hydroxyamin mit midestens einer Hydroxygruppe und mindestens einer Aminogruppe und Wasser, sowie gegebenenfalls Verdünner und/oder übliche Hilfs- und Zusatzstoffe, enthalten, durch Vermischung mit Kohlendioxid. Die Erfindung betrifft ferner die Verwendung dieser flüssigen Polyaminkohlensäuresalz-Kompositionen zur Herstellung von gegebenenfalls aufgeschäumten Polyurethanharnstoffen, speziell zur Beschichtung von Substraten oder Herstellung von Flächengebilden unter Einsatz von (vorzugsweise blockierte) Isocyanatgruppen aufweisenden NCO-Präpolymeren und der flüssigen Polyamin/Kohlensäuresalz-Kompositionen als Kettenverlängerer und/oder Vernetzer und gleichzeitig als physiologisch unbedenkliche Treibmittel.

Es ist bekannt, aus Aminen oder Polyaminen, Kohlendioxid und Wasser Carbonate oder Hydrogencarbonate dieser Amine herzustellen. Dabei entstehen in der Regel ziemlich hochschmelzende, in Hydroxylverbindungen, wie sie üblicherweise zur Herstellung von Polyurethanen Verwendung finden, un- oder schwerlösliche, kristalline Verbindungen. Diese kristallinen Kohlensäuresalze der Amine, wie z. B. gegebenenfalls unterschiedlich hydratisierte Hydrogencarbonate und/oder Carbonate, können mit Isocyanatgruppen aufweisenden Verbindungen, oder Verbindungen, die wie Isocyanatgruppen zu reagieren vermögen, zu Harnstoffgruppen aufweisenden höhermolekularen Verbindungen umgesetzt werden. So lehrt die US-A 3 425 964 die Härtung von Polyurethanharzen mit festen Amincarbonaten, die bei 25 °C unbeschränkt stabil sind. Diese US-Patentschrift lehrt auch die Herstellung geschäumter Prodikte hieraus. In der JP-A 50 052 175 wird die Herstellung von Polyurethan-Formteilen aus einem Polyurethnreaktionsgemisch unter Zusatz eines (cyclo)aliphatischen Diamincarbonats wie z. B. 1,6-Diaminohexancarbonat bei unter der Zersetzungstemperatur des Carbonate liegenden Temperaturen beschrieben. Zur Härtung und Formfixierung wird über den Zersetzungspunkt des Amincarbonats hinaus erhitzt.

In der DE-PS 838 217 ist die Herstellung von linearen Polyharnstoffen durch Hitzekondensation von Diisocyanaten und Kohlensäuresalzen von Diaminen beschrieben. Die JP-A 7 213 068 lehrt die Verwendung von Amincarbonaten bei der Herstellung von Polyurethanschaum-Heißklebern.

Der Stand der Technik kennt nur die Verwendung von Amin/$CO_2$-Addukten (Carbamaten oder Carbonaten) in Form kristalliner Produkte. Diese kristallinen $CO_2$-Addukte müssen in möglichst feinverteilter Form eingesetzt werden, um ungleichmäßige Aushärtung zu vermeiden. Weiter müssen Vorkehrungen getroffen werden, um das Absetzen solcher dispergierten Ammin/$CO_2$-Addukte zu vermeiden. Weiterhin ist jedem Fachmann bekannt, daß die Vernetzung von NCO-enthaltenden Verbindungen mit in heterogener Phase vorliegenden Feststoffen nur mit erhöhtem Aufwand zu erreichen ist und häufig zu minderwertigen Produkten führt, da diese Feststoffe nicht genügend angekoppelt und eingebaut werden. Die Forderung, möglichst feinteilige Suspensionen von Diamin/$CO_2$-Addukten mit Polyisocyanaten umzusetzen, gilt selbst für Umsetzungen der kristallinen $CO_2$-Addukte in hochpolaren Lösungsmitteln wie Dimethylformamid (vgl. DE-B 1 223 154).

Aus der französischen Patentschrift 1 413 484 war es auch bekannt, alkoholische Hydroxylgruppen aufweisende Polyharnstoffe bzw. Polyhydrazodicarbonsäureamide in hochpolaren Lösungsmitteln wie Dimethylformamid oder Dimethylacetamid dadurch herzustellen, daß man Lösungen der kohlensauren Salze der alkoholische Hydroxylgruppen aufweisende Diamine, wie N-Hydroxyethyl-hexan-1,6-diamin oder 1,3-Diamino-propanol-2 bei − 20 bis + 30 °C in Lösungsmitteln mit aromatischen Diisocyanaten umsetzt. Die kohlensauren Salze sind dabei in hochpolaren Lösungsmitteln gelöst oder suspendiert und werden in den hochpolaren Lösungsmitteln selbst gebildet, wobei man Hydroxydiamine und gegebenenfalls auch Diamine oder Hydrazine ohne Hydroxylgruppen mitverwenden kann. Bei Mitverwendung von Diaminen ohne Hydroxylgruppen (z. B. Ethylendiamin) scheiden sich jedoch unlösliche, kristalline Aminsalze aus. Durch Umsetzung der Aminsalze mit den Polyisocyanaten bilden sich Lösungen, aus denen durch Verdampfen des Lösungsmittels harte, homogene Polyharnstoffe erhalten werden.

Ziel der vorliegenden Erfindung war es also, die sich aus dem Stand der Technik ergebenden Nachteile kristalliner Amincarbonate als Kettenverlängerungsmittel zu vermeiden und auch Amincarbonatumsetzungen ohne hochpolare Lösungsmittel zu ermöglichen. Weiterhin war es Aufgabe der Erfindung, nicht-kristalline Kompositionen, welche Carbonate und/oder Hydrogencarbonate aliphatischer und/oder cycloaliphatischer primärer oder sekundärer Polyamine, vorzugsweise primärer Diamine, enthalten, zur Verfügung zu stellen. Ziel war es auch, hohe Anteile von cycloaliphatischen primären Diaminen in flüssiger Form als Amin-Kohlensäuresalzgemisch zur Verfügung zu stellen. Eine weitere Aufgabe war es, ein Verfahren zur Herstellung aufgeschäumter Flächengebilde aus Polyurethanharnstoffen zur Verfügung zu stellen, wobei als Treibmittel physiologisch unbedenklich⌐ Produkte eingesetzt werden. Ferner soll durch die Erfindung ein leicht verarbeitbares, flüssiges, nicht-kristallines Gemisch zur Verfügung gestellt werden, das bei der Polyurethanharnstoffbildung gleichzeitig als Kettenverlängerer oder -vernetzer wie auch als Treibmitteldonator wirkt, wobei das Kohlendioxid als indifferentes, physiologisch unbedenkliches Treibmittel wirkt.

Überraschenderweise wurde gefunden, daß Salze der Kohlensäure (Carbonate und/oder Hydrogencarbonate) von Gemischen aus

2

1. aliphatischen und/oder cycloaliphatischen Polyaminen, vorzugsweise Diaminen, die primäre und/oder sekundäre Aminogruppen aufweisen, mit

2. nachstehend näher bezeichneten hydroxyaminen, vorzugsweise Hydroxyalkylgruppen tragenden (Poly)Aminen, gegebenenfalls in Gegenwart zusätzlicher Mengen Wasser und gegebenenfalls bestimmten Lösungsmittelgruppen als Verdünner,

nicht kristallisieren, sondern in einem flüssigen oder pastenartig fließfähigen Zustand vorliegen.

Charakteristisch für diese Kohlensäuresalzgemische ist die Abwesenheit von kristallinen Kompartimenten. Weiter wurde überraschenderweise gefunden, daß vor, während oder nach der Bildung der erfindungsgemäßen Mischkohlensäuresalze zur Erniedrigung der Viskosität der Adduktmischungen Lösungsmittel, die üblicherweise Hydrogencarbonat- respektive Carbonat-Nichtlöser darstellen, zugegeben werden können, ohne daß eine Ausfällung der Kohlensäuresalz-Komponenten erfolgt. Vorzugsweise wird nur ein Teil der Aminogruppen in der Mischung mit Kohlendioxid in die kohlensauren Salze überführt.

Gegenstand der Erfindung sind somit nicht-kristalline, flüssige oder fließfähige Polyamin-Kohlensäuresalz-Kompositionen aus Polyaminen und $CO_2$,
dadurch gekennzeichnet, daß sie enthalten :

1) aliphatische oder cycloaliphatische, primäre und/oder sekundäre Aminogruppen (vorzugsweise primäre Aminogruppen) aufweisende Polyamine (vorzugsweise Polyamine mit 2 bis 4 Aminogruppen, besonders bevorzugt primäre Diamine, speziell cycloaliphatische Diamine),

2) aliphatische oder cycloaliphatische Hydroxypolyamine mit mindestens einer Hydroxygruppe und mindestens einer Aminogruppe (vorzugsweise Mono- bis Tris-hydroxyalkyl-polyamine, besonders bevorzugt Mono- und Bis-hydroxyalkyl-alkylendiamine),
im Mengenverhältnis von 1) : 2) = 95 : 5 bis 10 : 90 Gew.-% (vorzugsweise 80 : 20 bis 25 : 75 Gew.-%, besonders bevorzugt 65 : 35 bis 30 : 70 Gew.-%),

3) gegebenenfalls Verdünner in Form organischer Lösungsmittel mit einem Siedepunkt unter 160 °C und einer zumindest teilweisen Löslichkeit in Wasser, in Mengen bis zu 90 Gew.-% Verdünner (vorzugsweise bis 60 Gew.-%, besonders bevorzugt bis 30 Gew.-%) in der Gesamtmischung 1) bis 6),

4) gegebenenfalls weitere, an sich bekannte Hilfs- und Zusatzstoffe,

5) 0,01 mol bis 5 mol (vorzugsweise 0,1 bis 1,0, besonders bevorzugt 0,15 bis 0,7 mol) Wasser pro Aminäquivalent, wobei die Wassermenge mindestens 1 mol Wasser pro 1 mol Kohlendioxid betragen muß,
und

6) 0,01 bis 0,99 mol $CO_2$ pro Aminäquivalent (vorzugsweise 0,05 bis 0,80, besonders bevorzugt 0,1 bis 0,5 mol).

Gegenstand der Erfindung ist auch ein Verfahren zur Herstellung von nicht-kristallinen, flüssigen oder fließfähigen Polyamin-kohlensäuresalz-kompositionen aus Polyaminen und Kohlendioxid, dadurch gekennzeichnet, daß man

1) aliphatische oder cycloaliphatische, primäre und/oder sekundäre Aminogruppen (vorzugsweise primäre Aminogruppen) aufweisende Polyamine (vorzugsweise Polyamine mit 2 bis 4 Aminogruppen, besonders bevorzugt primäre Diamine, speziell primäre cycloaliphatische Diamine),

2) aliphatische oder cycloaliphatische Hydroxypolyamine mit mindestens einer Hydroxygruppe und mindestens einer Aminogruppe (vorzugsweise Mono- bis Tris-hydroxyalkyl-polyamine, besonders bevorzugt Mono- und Di-hydroxyalkyl-alkylendiamine)
im Mengenverhältnis von 1) : 2) = 95 : 5 bis 10 : 90 Gew.-% (vorzugsweise 80 : 20 bis 25 : 75 Gew.-%, besonders bevorzugt 65 : 35 bis 30 : 70 Gew.-%),
gegebenenfalls in Gegenwart von

3) Verdünnern in Form organischer Lösungsmittel mit einem Siedepunkt unter 160 °C (bevorzugt unter 146 °C) und einer zumindest teilweisen Löslichkeit in Wasser (bevorzugt 0 bis 90 Gew.-% Lösungsmittel in der Mischung 1) bis 6), besonders bevorzugt 0 bis 30 Gew.-%),
gegebenenfalls unter Zusatz von

4) weiteren, an sich bekannten Hilfs- und Zusatzstoffen,
mit

5) Wasser vermischt, wobei die Wassermenge 0,01 bis 5 mol (vorzugsweise 0,1 bis 1,0, besonders bevorzugt 0,15 bis 0,7 mol) Wasser pro Aminäquivalent und mindestens 1 mol Wasser pro 1 mol Kohlendioxid betragen muß,
und mit

6) Kohlendioxid versetzt, so daß die Menge $CO_2$ pro Äquivalent Amin 0,01 bis 0,99 mol $CO_2$ (vorzugsweise 0,05 bis 0,80, besonders bevorzugt 0,1 bis 0,5 mol), beträgt.

Gegenstand der Erfindung ist ferner die
Verwendung der nicht-kristallinen Polyamin-Kohlensäuresalz-Kompositionen zur Herstellung von gegebenenfalls geschäumten Polyurethanharnstoffen, vorzugsweise zur Herstellung von gegebenenfalls geschäumten Beschichtungen auf textilen, vliesartigen, lederartigen oder anderen Substraten aus

A) durchschnittlich 2 bis 4, gegebenenfalls blockierte, aromatische und/oder aliphatische und/oder cycloaliphatische NCO-Gruppen aufweisenden NCO-Präpolymeren mit einem NCO-Gehalt von 1 bis 24 Gew.-% (vorzugsweise 1,7 bis 6 Gew.-%),

B) Kettenverlängerungsmitteln und/oder Vernetzern,

sowie gegebenenfalls

C) an sich bekannten Hilfs- und Zusatzstoffen und Lösungsmitteln,

dadurch gekennzeichnet, daß man

als Komponente (B) die erfindungsgemäßen nichtkristallinen, flüssigen oder fließfähigen Polyaminkohlensäuresalz-Kompositionen zu mindestens 50 Äquivalentprozenten (vorzugsweise zu ⩾ 75 %), besonders bevorzugt zu 100 %, neben gegebenenfalls bis zu 50 Äquivalentprozenten an üblichen Kettenverlängerungsmitteln oder Vernetzern einsetzt.

Man kann aber die Menge der Polyamin-Kohlensäuresalz-Kompositionen auch auf niedrigere Mengen begrenzen, z. B. 20-50 Äquivalent-% neben 80-50 Äquivalent-% üblicher Kettenverlängerungsmittel. Dies ist jedoch weniger bevorzugt.

Für die Polyaminkomponente 1) geeignete Verbindungen sind z. B.

lineare oder verzweigte aliphatische Diamine mit primären Aminogruppen, wie z. B. 1,2-Diaminoethan, 1,2-Diaminopropan, 1,3-Diaminopropan, 1,4-Diaminobutan, 1,5-Diaminopentan, 1,6-Diaminohexan, 2,2,4-Trimethyl-1,6-diaminohexan, 1,7-Diaminoheptan, 1,8-Diaminooctan, 1,10-Diaminodecan, 1,11-Diaminoundecan, 1,12-Diaminododecan ; oder Heteroatome aufweisenden Diamine wie 1,5-Diamino-3-oxapentan, 1,8-Diamino-3,6-dioxa-octan, 1,11-Diamino-3,6,9-trioxa-undecan, 1,13-Diamino-4,9-dioxa-tridecan, 1,9-Diamino-5-oxa-nonan ;

bevorzugt sind cycloaliphatische Diamine mit 2 primären Aminogruppen wie 5-Amino-2,2,4-trimethyl-1-cyclopentanmethylamin, 5-amino-1-aminomethyl-1,3,3-trimethylcyclohexan (Isophorondiamin), 1,4-Diaminocyclohexan, 1,3-Diaminocyclohexan, 1,8-Diamino-p-menthan, 1-Methyl-2,6-diamino-cyclohexan, 1-Methyl-2,4-diamino-cyclohexan, 4,4'-Diamino-dicyclohexylmethan, sowie seine 2,4'-bzw. 2,2'-Isomeren, 4,4'-Diamino-3,3'-dimethyldicyclohexylmethan sowie seine 2,4'- und 2,2'-Diamino-Isomeren, 4,4'-Diaminodicyclohexylethan, 4,4'-Diaminodicyclohexylether, Bis-(4'-aminocyclohexyl)-propan-(2,2), 4,4'-Diamino-dicyclohexan, 4,4'-Diamino-3,3'-diethyl-dicyclohexylmethan, 1,1-Di-(4'-aminocyclohexyl)-cyclohexan, 1,1-Di-(4'-amino-3'-methylcyclohexyl)-cyclohexan, 4,4'-Diamino-3,5-diethyl-3',5'-diisopropyl-dicyclohexylmethan, 4,4'-Diamino-3,3',5,5'-tetraethyl-dicyclohexylmethan in allen Konformeren bzw. beliebigen Gemischen der Konformeren der cycloaliphatischen Diamine ;

weiterhin sind einsetzbar tertiäre Aminogruppen enthaltende Di- oder Polyamine, z. B. Bis-(3-aminopropyl)-methylamin, N,N'-Bis-(2 aminoethyl)-piperazin, N,N'-Bis-(3-aminopropyl)-piperazin ;

Diamine mit sekundären Aminogruppen sind einsetzbar, wenn auch als alleinige Komponente weniger bevorzugt : z. B. N-Methyl-ethylendiamin, N,N'-Diethyl-ethylendiamin, N,N'-Dibutyl-hexamethylendiamin, Piperazin oder 2,5-Dimethyl-piperazin. Ferner sind geeignet Hydrazin oder Hydrazinhydrat sowie N,N'-Diaminopiperazin. Es können aber auch Verbindungen mit 3 oder 4, sowie gegebenenfalls noch mehr primären und/oder sekundären Aminogruppen verwendet werden, z. B. 1,6,11-Triaminoundecan, 1,5-Diamino-3-aza-pentan, 1,8-Diamino-3,6-diaza-octan, 1,11-Diamino-3,6,9-triaza-undecan, 1,14-Diamino-3,6,9,12-tetraaza-tetradecan, 1,7-Diamino-4-aza-heptan, 1,11-Diamino-4,8-diaza-undecan, 1,13-Diamino-4,10-diaza-7-methyl-7-aza-tridecan, 1,3,5-Triamino-cyclohexan.

Neben den Polyaminen können in untergeordneten Mengen (kleiner 5 Mol.-%) gegebenenfalls Monoamine wie Methylamin, Ethylamin, Propylamin, Isopropylamin, n-butyl-, iso-Butyl- oder tert.-Butylamin, Cyclopentylamin, Cyclohexylamin oder Piperidin bzw. N,N-Dimethylhydrazin mitverwendet werden.

Im erfindungsgemäßen Verfahren werden aliphatische Diamine wie Ethylendiamin und 1,6-Diaminohexan sowie besonders die cycloaliphatischen Diamine wie die 4,4'-Diamino-3,3'-($C_1$-$C_4$-alkyl)-dicyclohexylmethan-Verbindungen und die 4,4'-Diamino-3,3',5,5'-tetra-($C_1$-$C_4$-alkyl)-dicyclohexylmethan-Verbindungen, z. B. 4,4'-Diamino-3,3'-dimethyl-dicyclohexylmethan, 4,4'-Diamino-3,3'-diethyl-dicyclohexylmethan, 4,4'-Diamino-3,3',5,5'-tetraethyl-(oder -tetraisopropyl-)-dicyclohexylmethan, sowie 4,4'-Diamino-3,5-diethyl-3',5'-diisopropyl-dicyclohexylmethan, sowie 5-Amino-1-aminomethyl-1,3,3-trimethyl-cyclohexan bevorzugt.

Als aliphatische oder cycloaliphatische Hydroxyamine (Komponente 2) können Verbindungen mit mindestens einer primär, sekundär oder tertiär gebundenen Hydroxylgruppe und mindestens einer primären, sekundären und tertiären Aminogruppe verwendet werden. Bevorzugt sind Hydroxyamine mit mindestens einer Hydroxygruppe und mindestens zwei primären und/oder sekundären Aminogruppen. Vorzugsweise werden Mono- bis Tris-hydroxyalkyl-polyamine und besonders bevorzugt Mono- und Dihydroxyalkyl-alkylendiamine eingesetzt.

Beispiele sind :

Mono-oxalkylierte Diamine, abgeleitet aus aliphatischen, gerad- oder verzweigtkettigen Diaminen, vorzugsweise mit 2 bis 12 Kohlenstoffatomen oder gegebenenfalls alkylsubstituierten cycloaliphatischen Diaminen der Cyclohexan-, Dicyclohexyl-, Dicyclohexylmethan-, Dicyclohexyl-2,2-propan- und Dicyclohexyl-1,1-cyclohexan-Reihe und Alkylenoxiden wie Ethylenoxid, Propylenoxid, Butylen-2,3-oxid oder auch Styroloxid. Bevorzugt werden mono-oxalkylierte aliphatische Diamine mit 2 bis 6 C-Atomen und gegebenenfalls cycloaliphatische Diamine, welche mit Ethylenoxid- oder Propylenoxid oxalkyliert wurden. Beispiele sind N-(β-hydroxyethyl-)-ethylendiamin, N-(β-hydroxyethyl)-propylendiamin-1,2, N-(β-hydroxyethyl)-propandiamin-1,3, N-(β-hydroxyethyl)-hexandiamin-1,6, N-(β-hydroxypropyl)-dodecandiamin-1,12, N-(β-hydroxypropyl)-ethylendiamin, N-(β-hydroxypropyl)-propylendiamin-1,2, N-(β-hydroxypropyl)-propandiamin-1,3, N-(β-hydroxypropyl)-butandiamin-1,4, N-(β-hydroxybutyl)-ethylendiamin, N-(β-hydroxybutyl)-hexandiamin-1,6, N-(β-hydroxyethyl)-xylylendiamin-1,3, N-(β-hydroxyethyl)-cyclohexandiamin-1,3 oder -1,4, N-(β-hydroxyethyl)-2,2,4-trimethylhexandiamin-1,6, 1-Methyl-2-amino-4-[N-(2-hydroxyethyl)-amino]-cyclohexan, N-(β-hydroxyethyl)-isophoron-diamin, N-(β-hydroxyethyl)-4-aza-4-methyl-heptandiamin-1,7. Weiterhin geeignet sind Bis-(hydroxyalkyl)-diamine, die aus entsprechenden gerad- oder verzweigtkettigen aliphatischen oder auch cycloaliphatischen Diaminen durch Alkoxylierung mit Alkylenoxiden, vorzugsweise Ethylenoxid und/oder Propylenoxid, erhalten werden. Beispiele sind N,N'-Bis-(β-hydroxyethyl)-ethylendiamin, N,N'-Bis-(β-hydroxypropyl)-ethylendiamin, N,N'-Bis-(β-Hydroxyethyl)-propylendiamin-1,2, N,N'-Bis-(β-hydroxypropyl)-propandiamin-1,3, N,N'-Bis-(β-hydroxyethyl)-1-methyl-2,4- bzw. -2,6-diaminocyclohexan, N,N'-Bis-(β-hydroxypropyl)-1-methyl-2,6- bzw. -2,4-diamino-cyclohexan, N,N'-Bis-(β-hydroxyethyl)-isophorondiamin, N,N'-Bis-(β-hydroxypropyl)-p-xylylendiamin, N-(β-hydroxyethyl)-N'-(β-hydroxypropyl)-ethylendiamin. Man kann auch oxalkylierte Tri- und Polyamine verwenden, z. B. Tris-(β-hydroxyethyl)-1,6,11-triamino-undecan. Ebenso sind Gemische verschiedener Oxalkylierungsstufen einsetzbar, z. B. Gemische aus Mono-, Bis- und Tris-hydroxyethyl-ethylendiamin.

Als Hydroxyamine können jedoch auch Verbindungen wie 1,3-Diamino-propanol-2, 1,6-Diamino-hexanol-2, 1,5-Diaminopentanol-3, 3,4-Diamino-2,2-dimethylbutanol-1, die Diaminocyclohexanole oder 1,11-Diaminoundecanol-6 verwendet werden.

Weitere geeignete Verbindungen sind β-Hydroxyethylhydrazin und β-Hydroxypropyl-hydrazin. Die oben angeführten Verbindungsklassen bzw. Verbindungen mit zwei Aminofunktionen (primäre, sekundäre bzw. primäre und sekundäre Aminogruppen) sind bevorzugt, da sie als Diamine bei der Kettenverlängerungsreaktion mit NCO-Verbindungen oder NCO-Präpolymeren (vorzugsweise mit blockierten NCO-Gruppen) reagieren. Besonders bevorzugt aus diesen Komponenten werden β-Hydroxyethyl- und/oder β-Hydroxypropyl-Gruppen aufweisende $C_2$-$C_6$-Alkylendiamine, besonders die β-Hydroxyethyl- bzw. β-Hydroxypropyl-mono- und -bis-ethylendiamine. Besonders bevorzugte Verbindung ist das β-Hydroxyethylethylendiamin.

Unter bestimmten Bedingungen können jedoch auch Monoamino-mono- oder -dihydroxyverbindungen (mit primären oder sekundären Aminogruppen) eingesetzt werden, z. B. 2-Amino-ethanol, 2-Methyl-2-aminoethanol, 2-Ethyl-2-aminoethanol, 6-Methyl-3-oxa-6-aza-heptanol, 6-Hydroxy-hexylamin ; ferner Bis-hydroxyalkylderivate primärer Amine, z. B. Bis-β-hydroxyethyl-amin, Bis-(β-hydroxyethyl)-methylamin, Bis-(β-hydroxyethyl)-butylamin, Bis-(β-hydroxyethyl)-oleylamin, Bis-(β-hydroxypropyl)-amin, Bis-(β-hydroxypropyl)-methylamin, Bis-(β-hydroxypropyl)-hexylamin oder N,N,N'-Tris-(β-hydroxypropyl)-ethylendiamin ; ferner Verbindungen wie 3-Aminomethyl-3,5,5-trimethyl-cyclohexanol, 2-Amino-2-hydroxymethyl-1,3-propandiol, 2-Amino-2-methyl-1,3-propandiol oder 2-Amino-2-methyl-1,3-propanol.

Diese Monoaminohydroxyverbindungen sind weniger bevorzugt, da sie bei der Reaktion mit blockierte NCO-Gruppen aufweisenden NCO-Präpolymeren im wesentlichen nur mit der Aminogruppe, d. h. monofunktionell reagieren. Sie können daher für diese Reaktionen in nur untergeordneter Menge (kleiner 5 Gew.-%) eingesetzt werden, da sie als Kettenabbrecher fungieren. Sie sind jedoch mit Amino- und Hydroxylgruppen als mehrfunktionelle Verbindungen dann wirksam, wenn man sie mit nicht-blockierten NCO-Präpolymeren einsetzt.

Weiterhin sind als Hydroxyamine Verbindungen mit einer, vorzugsweise jedoch mehreren, Hydroxygruppen und tertiären Aminogruppen geeignet. Dies sind z. B. Triethanolamin, Tris-β-hydroxypropylamin, Tetra-(β-hydroxyethyl)-ethylendiamin, Tetra-(β-hydroxypropyl)-ethylendiamin, Tetra-(β-hydroxyethyl)-isophorondiamin oder Di-(β-hydroxyethyl)-methylamin, Di-(β-hydroxyethyl)-butylamin oder Di-(β-hydroxypropyl)-ethylamin.

Diese t-Amin-Polyole wirken bei der Umsetzung mit nicht-blockierten NCO-Verbindungen als Polyolkettenverlängerer, zeigen jedoch gegenüber blockierten NCO-Gruppen in NCO-Präpolymeren eine zu langsame Reaktivität bei den üblichen Reaktionstemperaturen. Im letzteren Falle wirken sie nicht als Kettenverlängerungsmittel oder Vertnetzern, sondern wie Katalysatoren bzw. Zusatzstoffe.

Für die Verdünnungs-Komponente 3) sind organische Lösungsmittel geeignet, die sich zumindest z. T. in Wasser lösen und einen Siedepunkt von unter 160 °C, bevorzugt unter 146 °C, aufweisen. Beispielsweise können Alkohole wie Methanol, Ethanol, n-Propanol, iso-Propanol, n-Butanol, sec.-Butanol, tert.-Butanol, iso-Amylalkohol ; Etherglykole wie Ethylenglykolmonomethylether, Ethylenglykolmonoethylether ; Etherester wie Ethylenglykol-monomethylether-acetat, Ethylenglykol-monoethyletheracetat ; Ether wie Tetrahydrofuran oder Dioxan oder Ester wie Ameisensäureethylester, Essigsäureethylester, Propionsäuremethylester verwendet werden.

Weniger bevorzugt sind Ketone wie Aceton, Methylethylketon, Methylisobutylketon, da sie gegebenenfalls Reaktionen mit den (primären) Aminen eingehen können. Lösungsmittel mit Amid-, Harnstoff- oder Sulfongruppen, wie Dimethylformamid, Dimethylacetamid, N-Methyl-pyrrolidon, Tetramethylharnstoff oder Tetramethylensulfon werden nicht verwendet, oder höchstens in Beimischung von max. 10 Gew.-% zu den angegebenen Lösungsmitteln.

Als Hilfs- und Zusatzstoffe 4) kommen z. B. Emulgatoren, Antischäummittel, Pigmente, Farbstoffe, Weichmacher etc. in Frage, im allgemeinen können auch solche Zuschläge verabfolgt werden, wie sie bei der Verwendung der erfindungsgemäßen Kompositionen als Vernetzerkomponente in hitzehärtbaren Beschichtungskompositionen verwendet werden, z. B. Stabilisatoren, Verlaufsmittel, Fließverbesserer, Zellregler, Katalysatoren oder Reaktionsverzögerer, Flammschutzmittel und sonstige Additive in üblichen Mengen (s. DE-A 2 854 384, S. 25 bis 32).

Die erfindungsgemäße Herstellung der Polyaminkohlensäurekompositionen wird in der Regel so vorgenommen, daß ein Gemisch der Komponenten 1) und 2) im Gewichtsverhältnis 95 : 5 bis 10 : 90 bzw. in den bereits oben angeführten bevorzugten Verhältnissen, in einem geeigneten, mit Rührwerk versehenen Behälter vorgelegt wird. Bei der Vereinigung der Komponenten 1) und 2) tritt im allgemeinen eine leichte bis mäßige Erwärmung auf.

Die Zugabe des Wassers kann so erfolgen, daß 0,01 bis 5 mol Wasser pro Äquivalent basischer Stickstoffatome (bevorzugt 0,1 bis 1,0 mol Wasser, besonders bevorzugt 0,15 bis 0,7 mol Wasser) zur Mischung aus den Komponenten 1) und 2) gegeben werden. Ebenfalls möglich, wenn auch praktisch weniger bevorzugt, ist die Zugabe des fertigen Gemisches aus 1) und 2) zur vorgelegten Wassermenge oder die Vermischung der Wassermenge mit einer der Komponenten 1) oder 2), worauf anschließend jeweils die andere Komponente zugegeben wird. Möglich ist auch die Vermischung von Wasser mit nur Teilmengen von 1), 2) oder des Gemisches aus 1) und 2) und nachträglicher Vereinigung mit den Restmengen von 1), 2) oder des Gemisches aus 1) und 2). Die Wasserzugabe in jedweder angegebenen Variation verläuft unter Wärmeabgabe. Die Kohlendioxidzugabe 6) kann mit gasförmigem oder festem Kohlendioxid erfolgen. Bevorzugt wird so verfahren, daß zum vorgelegten Gemisch aus 1), 2) und Wasser (sowie gegebenenfals Verdünner 3) und Zusatzstoffen 4)) gasförmiges Kohlendioxid eingeleitet oder übergeleitet wird. Innerhalb von 5 Minuten bis 30 Stunden, bevorzugt 30 Minuten bis 6 Stunden, wird soviel gasförmiges Kohlendioxid zugeführt, daß das Gemisch 0,01 bis 0,99 mol Kohlendioxid, bevorzugt 0,05 bis 0,8, besonders bevorzugt 0,1 bis 0,5 mol Kohlendioxid pro Aminäquivalent aufnimmt. Dabei ist vorausgesetzt, daß die Mischung aus 1), 2) und Wasser (sowie gegebenenfalls weiteren Zusätzen 3) und 4)) mindestens soviel Wasser enthält, daß sich stets Salze der Kohlensäure (Carbonate oder Hydrogencarbonate) und keine Salze der Carbaminsäure (Carbamate) bilden, d. h. daß mindestens 1 mol Wasser pro 1 mol zugeführtes $CO_2$ vorhanden ist. Bevorzugt wird das Amingemisch so lange mit Kohlendioxid begast, bis eine Sättigung eingetreten ist, d. h. daß in praktisch vernünftiger Geschwindigkeit kein weiteres Kohlendioxid mehr aufgenommenb wird. Diese Sättigungsgrenze liegt im allgemeinen unter der auf alle NH-Äquivalente bezogenen theoretischen Aufnahmemenge.

Die aus Polyamin 1), Hydroxyamin 2), Wasser, gegebenenfalls Zusätzen und Kohlendioxid erhaltenen Kompositionen haben üblicherweise einen Kohlendioxidgehalt zwischen 0,1 und 25 Gew.-% bevorzugt 2 bis 10 Gew.-%.

Der Nachweis auf enthaltenes, chemisch gebundenes Kohlendioxid kann so geführt werden, daß eine definierte Probe entnommen, mit Vakuum, gegebenenfalls unter gleichzeitigem Einleiten eines inertes Gasstromes, z. B. Stickstoff, behandelt und mit Säure, z. B. Essigsäure, Ameisensäure, Salzsäure oder Schwefelsäure, versetzt wird. Aus dem Volumen des entstandenen Kohlendioxids kann z. B. über die allgemeine Gasgleichung die Gewichtsmenge des chemisch gebundenen Kohlendioxids berechnet werden. Das freigesetzte $CO_2$ kann auch gravimetrisch als $BaCO_3$ bestimmt werden.

Die Komponenten 3) und 4) können vor, während oder nach der Kohlendioxid-Umsetzung zugegeben werden. Bevorzugt wird die Komponente 3) nach der Kohlendioxidbegasung, Komponente 4) noch vorher zugegeben. Wird Komponente 3) vorher beigefüft, so ist es gleichermaßen möglich, sie zum Gemisch aus 1) + 2) oder 1) + 2) + Wasser oder 1) + Wasser oder 2) + Wasser zu geben.

Die Verdünnerkomponente 3) wird beispielsweise unter Rühren bei 15 bis 80 °C, bevorzugt 25 bis 60 °C, zugegeben, wobei dies sofort oder bis etwa 12 Stunden, bevorzugt 30 Minuten bis 6 Stunden, nach Beendigung der $CO_2$-Zugabe erfolgt. Es wird noch einmal darauf hingewiesen, daß diese Verdünner ohne Verwendung der Komponente 2) zu kristallinen Kohlensäuresalzen führen. Die Menge an Komponente 3), bezogen auf das Gesamtgewicht der Komponenten, beträgt 0 bis 90 Gew.-%, bevorzugt bis 60 Gew.-%, besonders bevorzugt bis 30 Gew.-%. Eine endgültige Einstellung des Gemisches der Polyamin-Kohlensäuresalz-Kompositionen kann auch dadurch erfolgen, daß ein Polyamin-Kohlensäuresalz-Gemisch nachträglich mit weiteren Polyaminen, Hydroxyaminen, Wasseranteilen oder Gemischen dieser Komponenten gegebenenfalls mit weiterem Verdünner, vermischt werden.

Die erfindungsgemäß hergestellten bzw. erfindungsgemäß zusammengesetzten Polyamin-Kohlensäure-Kompositionen finden Verwendung zum Aufbau von Polyurethanharnstoffen, vorzugsweise durch Reaktion mit NCO-Präpolymeren auf Basis überschüssiger Mengen an Polyisocyanaten und höhermolekularen Polyolen und/oder niedermolekularen Polyolen und gegebenenfalls weiteren Kettenverlängerungsmitteln.

Für den Aufbau der gegebenenfalls blockierte NCO-Gruppen aufweisenden NCO-Präpolymeren (Komponente A) der Polyurethan-Ausgangsstoffe) kommen bevorzugt aromatische, aber auch aliphatische und/oder cycloaliphatische Polyisocyanate, wie sie eingehend in den US-A 3 984 607 und 4 035 213, der DE-A 2 402 840, DE-B 2 457 387 sowie DE-A 2 854 384 beschrieben sind, in Frage. Erfindungsgemäß bevorzugt sind 4,4'- und/oder 2,4'-Diisocyanato-diphenylmethan, die isomeren Toluylendiisocyanate und ihre technischen Gemische bzw. Abwandlungsprodukte, sowie 3,3'-Dimethyl-4,4'-diisocyanato-dicyclohexylmethan, 4,4'-Diisocyanato-dicyclohexylmethan, 1,6-Hexandiisocyanat, Isophorondiisocyanat, sowie Gemische dieser Diisocyanate.

Als Reaktionspartner für diese Polyisocyanate zur Herstellung der NCO-Präpolymeren kommen höhermolekulare Polyhydroxylverbindungen in Frage, die 2 bis 8, vorzugsweise 2 bis 3 Hydroxylgruppen aufweisen und ein Molekulargewicht von etwa 500 bis 10 000, vorzugsweise 1 000 bis 6 000 haben und wie sie im Detail ebenfalls in den o. g. Publikationen beschrieben werden. Erfindungsgemäß bevorzugt sind im Durchschnitt 2 bis 3 Hydroxylgruppen aufweisende Propylenoxid-Polyether, die auch Polyethylenoxideinheiten oder Polyethylenoxid-Sequenzen enthalten können, sowie unterhalb von 60 °C schmelzende Hydroxypolyester mit 2 bis 3 endständigen Endgruppen und einem mittleren Molekulargewicht von 1 000 bis 6 000. Erfindungsgemäß bevorzugt sind Mischungen der genannten Hydroxypolyether mit Hydroxypolyestern aus Adipinsäure, Hexandiol-1,6 und Neopentylglykol vom mittleren Molekulargewicht 1 000 bis 3 000 oder auch Ester auf der Basis von Hexandiol-Polycarbonaten oder deren Mischungen mit Polyestern.

Bei der Herstellung der NCO-Präpolymere können gegebenenfalls auch niedermolekulare Polyole mit einem Molekulargewicht von weniger als etwa 399, vorzugsweise weniger als 300, mitverwendet werden, wie sie als Kettenverlängerungsmittel an sich bekannt sind. Bevorzugt sind erfindungsgemäß in diesem Zusammenhang die Kettenverlängerungsmittel in einem Molverhältnis bis zu 15 : 1, vorzugsweise 6 : 1, zu den höhermolekularen Polyhydroxylverbindungen. Bevorzugte Verbindungen sind dabei Butandiol-1,4, Trimethylolpropan, Pentaerythrit, Hydrochinon-bis-hydroxyethylether oder Bis-(hydroxyalkyl)-ether des 4,4'-Bis-(hydroxyphenyl)-propans. Weitere geeignete niedermolekulare Polyole sind in der DE-A 2 854 384 beschrieben.

Es können jedoch auch überschüssige Polyisocyanate mit den niedermolekularen Polyolen alleine umgesetzt werden, z. B. Trimethylolpropan mit überschüssigem Diphenylmethan-4,4'-diisocyanat zu einem NCO-Präpolymer mit ca. 24 Gew.-% NCO. In diesen Fällen werden jedoch vorzugsweise auch höhermolekulare Polyole in der Polyurethan-bildenden Reaktionsmischung mitverwendet.

Die Herstellung der NCO-Präpolymere erfolgt in an sich bekannter Weise, indem man die genannten Polyhydroxylverbindungen mit überschüssigen Diisocyanaten, vorzugsweise bei ca. 70 bis 110 °C umsetzt. Man wählt hierbei im allgemeinen ein NCO/OH-Verhältnis von 1,5 : 1 bis 10 : 1, vorzugsweise von 1,7 : 1 bis 2,5 : 1. Der Gehalt von NCO-Gruppen im Präpolymeren liegt dabei zwischen etwa 1,0 und 24 % NCO, vorzugsweise 1,7 bis 4,5 % NCO.

Als Blockierungsmittel für die NCO-Präpolymeren kommen Phenole, tertiäre Alkohole, Oxime, β-Dicarbonylverbindungen, Lactame, Benztriazole und andere in Frage.

Solche und weitere Blockierungsmittel sind von Z. W. Wicks Jr., Progress in Org. Coatings 3, 73-99 (1975) : G. R. Griffin und L. J. Willwerth in Ind. Eng. Chem., Prod. Res. a. Develop. I, 265-268 (1962) ; A. Damusis und K. C. Frisch in Film-Forming Compositions, Tl. I, Marcel Dekker, New York, 1967 und S. W. Wong, A. Damusis, K. C. Frisch, R. L. Jacobs und J. W. Long in J. Elast. Plast. 11, 15-36 (1979) beschrieben. Als Blockierungsmittel bevorzugt sind Ketoxime aus Hydroxylamin und Ketonen wie Aceton, Methylethylketon, Diethylketon, Cyclohexanon, Acetophenon und Benzophenon. Besonders bevorzugt als Blockierungsmittel ist Methylethylketoxim (Butanonoxim).

Die blockierten NCO-Vorpolymerisate können zwecks Einstellung der optimalen Verarbeitungsviskosität von 20 bis 40 000 mPa.s bei 20 °C mit organischen Lösungsmitteln, bevorzugt bis zu 15 Gew.-%, besonders bevorzugt bis zu 10 Gew.-%, bezogen auf das blockierte NCO-Vorpolymerisat, gemischt werden. Infolge des blockierten Charakters der NCO-Gruppen müssen hierbei nicht notwendigerweise gegenüber NCO-Gruppen inerte Lösungsmittel eingesetzt werden. Beispielsweise können Isopropanol, Ethylenglykolmonomethyl- bzw. Ethylenglykolmonoethylether sowie deren Essigsäureester, ferner Methylethylketon, Cyclohexanon, Butylacetat und Dimethylformamid verwendet werden.

Als Vernetzerkomponente B) für die gegebenenfalls blokkierten NCO-Präpolymeren wird erfindungsgemäß die Polyamin-Kohlensäuresalze enthaltende Komposition, wie oben beschrieben, verwendet. Dabei werden innerhalb der Komposition als Polyamin 1) ganz besonders die 3,3'-Di-alkylderivate von 4,4'-Diamino-dicyclohexylmethan bevorzugt, besonders das 4,4'-Diamino-3,3'-dimethyl-dicyclohexylmethan. Als Hydroxyamin 2) werden 2-Hydroxyalkylamine (2-Hydroxyethyl bzw. 2-Hydroxypropylamine) bevorzugt, besonders bevorzugt ist N-(β-hydroxyethyl)-ethylendiamin. Die Vermischung der blockierten NCO-Präpolymere mit der Polyamin-Kohlensäuresalz-Vernetzerkomposition erfolgt im allgemeinen etwa im Verhältnis der Äquivalentgewichte der Komponenten, obwohl für einige Anwendungszwecke auch eine Untervernetzung zweckmäßig ist, so daß das Äquivalentverhältnis von (blockiertem) NCO zu primären und/oder sekundären Aminogruppen erfindungsgemäß im allgemeinen zwischen 1,35 : 1 und 0,95 : 1, bevorzugt 1,25 : 1 bis 1 : 1, liegt. Es sei hier betont, daß man für die Umsetzung der blockierten NCO-Vorpolymerisate die Hydroxygruppen der Komponente 2) nicht in die Äquivalentrechnung mit einbezieht, da sie im allgemeinen nicht mit den blockierten NCO-Gruppen unter den Reaktionsbedingungen reagieren.

Vorzugsweise besteht die Kettenverlängerungsmittel- und/oder Vernetzerkomponente B) ausschließlich aus der erfindungsgemäßen Diamin/$CO_2$-Komposition. Es können jedoch auch bis zu 50 Äquivalentprozent der eingesetzten Komponente B) aus üblichen Kettenverlängerungsmitteln und/oder Vernetzern bestehen, z. B. aromatischen Di- und Polyaminen oder Hydrazidverbindungen, wie 4,4'-Diaminodiphenylmethan oder 3,3',5,5'-Tetraalkyl-4,4'-diaminodiphenylmethanen wie 3,3',5,5'-Tetraethyl-4,4'-diaminodiphenylmethan oder 3,5-Diethyl-3',5'-diisopropyl-4,4'-diamino-diphenylmethan. Weitere geeignete Kettenverlängerungsmittel sind z. B. in der DE-A 2 584 384 beschrieben.

Selbstverständlich können auch den gebrauchsfertigen Reaktivmassen (NCO-Vorpolymerisate + Vernetzer) oder ihren Ausgangsstoffen an sich bekannte Zuschläge, wie z. B. Katalysatoren etc. in üblichen Mengen beigemischt werden. Geeignete Verbindungen sind beispielsweise in der DE-A 2 584 384 aufgezählt.

Da durch die erfindungsgemäße Umsetzung zu Polyurethanharnstoffen durch die Polyamin-Kohlensäuresalz-Komposition Kohlendioxid als Treibmittel freigesetzt wird, entstehen in der Regel aufgeschäumte Polyurethanharnstoff-Kunststoffe, deren Dichte im allgemeinen zwischen 25 und 90 % der nicht-geschäumten Dichte der Polyurethanmassen liegt. Unter Druck kann gegebenenfalls das Aufschäumen verhindert oder reduziert werden. Daher eignen sich diese Reaktiv-Mischungen mit ihrer verzögerten Reaktivität und gleichzeitigen Treibmittelwirkung besonders zur Verwendung in der Direkt- und Umkehrbeschichtung auf Substraten wie Geweben, Gewirken, Vliesen oder natürlichen oder synthetischen Ledermaterialien, wobei mindestens ein Strich des Beschichtungsaufbaus aus Deckstrich, Haftstrich und/oder Zwischenstrich unter Verwendung der vorstehend beschriebenen wärmehärtbaren Reaktivkompositionen hergestellt wird. Der Aufbau der verschiedenen Schichten kann auch mit üblichen Ein- oder Zweistrichkomponenten-Polyurethanen nach dem Stand der Technik kombiniert werden.

Im allgemeinen wird dazu so vorgegangen, daß man zunächst auf einem geeigneten Zwischenträger, z. B. ein Stahlband, eine Silikonmatrize, ein Trennpapier und dergl., den Deckstrich (vorzugsweise eine Paste aus der erfindungsgemäßen Reaktivzusammensetzung oder auch eine konventionelle Rezeptur) in einer Auflage von ca. 20 bis 80 g/m$^2$ aufträgt, in einem Trockenkanal trocknet, auf den getrockneten Deckstrich den Haftstrich (vorher gegebenenfalls noch den Zwischenstrich) in einer Stärke von ca. 30 bis 100 g/m$^2$ aufbringt, das Substrat zukaschiert, die Beschichtung in einem weiteren Trockenkanal bei ca. 120 bis 190 °C, vorzugsweise 140 bis 170 °C, während einiger Minuten ausheizt und dann das beschichtete Substrat vom Trennträger abzieht. Als Substrate eignen sich textile Bahnen wie Gewebe, Gewirke, Vliese, aber auch Leder, Spaltleder Lederfasermaterialien. Bei Leder als Substrat liegen die Trockentemperaturen dür den Haftstrich bei etwa 60 bis 110 °C, besonders zwischen 80 und 90 °C, um das Ledersubstrat nicht zu schädigen.

Wie schon erwähnt, können die Beschichtungspasten aus den erfindungsgemäßen Kompositionen auch im Direktstreichverfahren unmittelbar auf das z. B. textile Substrat aufgebracht werden.

Zum Aufbringen der Reaktivpasten im Transfer- oder im Direktstrichverfahren bedient man sich der bekannten Techniken des Walzenrakels, Gummituchrakels, Reverse Roll Coaters und anderen Techniken. Darüber hinaus lassen sich mit besonderem Vorteil für hochkonzentrierte Streichpasten die modernen Techniken des Siebdrucks und des Gravurwalzendruckes einsetzen.

Die nach dem erfindungsgemäßen Verfahren mit Polyurethanharnstoffen beschichteten Materialien sind zur Herstelung von Schuhobermaterial und Futtermaterial, schwerer Arbeitsschutzbekleidung, als Täschnermaterial, als Polstermaterial, zur Grundierung von direkt beschichteten Artikeln wie z. B. Planen und Förderbändern etc., insbesondere aber für Bekleidungszwecke geeignet. Sie zeigen besonders weichen Griff und günstige Knickeigenschaften.

Die erfindungsgemäßen Amin-Kohlensäuresalz-Kompositionen können selbstverständlich auch mit nicht-blockierte NCO-Gruppen aufweisenden NCO-Verbindungen zur Umsetzung gebracht werden. Sie werden hierbei der NCO-aktive Wasserstoffatome aufweisende Verbindungen enthaltenden Komponente in einer Menge beigemischt, daß die Äquivalentverhältnisse von NCO zu $NH_2$-Gruppen im allgemeinen zwischen 1,35 : 1 und 0,95 : 1 liegen.

Man kann so zur Herstellung von Schaumstoffen beispielsweise die Mischung der Polyamin-Kohlensäuresalz-Kompositionen mit Katalysatoren und gegebenenfalls weiteren Hilfsmitteln und Verdünnern mit den NCO-Präpolymeren, gegebenenfalls in kontinuierlich dosierenden und mischenden Geräten, vermischen.

## Herstellungsbeispiele

In den nachstehenden Beispielen sind Mengenangaben, wenn nicht anders vermerkt, als Gewichtsteile bzw. Gewichtsprozente zu verstehen.

## Beispiel 1

800 g 3,3'-Dimethyl-4,4'-diamino-dicyclohexylmethan (3,36 mol), 875 g N-(β-hydroxyethyl)-ethylendiamin (8,41 mol), 212 g Wasser (11,8 mol) und 1,3 l Methanol werden vorgelegt. Bei einer Innentemperatur von 30 bis 40 °C, die durch externes Kühlen mit einem Eisbad in diesem Bereich gehalten wird, wird solange Kohlendioxid eingeleitet, bis keine $CO_2$-Aufnahme mehr zu beobachten ist.

Nachdem das Methanol bei 18 mbar/70 °C vollständig entfernt wurde, wird die bei Raumtemperatur zähe Paste bei 20 °C mit einem Gemisch aus 2 490 g 3,3'-Diamino-4,4'-dimethyl-dicyclohexylmethan (10,46 mol), 1 098 g N-(β-hydroxyethyl)-ethylendiamin (10,56 mol) und 133,6 g Wasser (7,42 mol) verdünnt.

Die bei Raumtemperatur thixotrope und bei 50 °C leicht fließfähige Polyamin-Kohlensäuresalz-Komposition verdickt sich selbst nach über 6-monatiger Lagerung bei Raumtemperatur nicht, zeigt keine kristallinen Kompartimente und entwickelt nach Zugabe überschüssiger 50 %iger Schwefelsäure aus 50 g der Komposition 1,5 l Kohlendioxid.

### Beispiel 2

1 178 g 3,3'-Dimethyl-4,4'-diamino-dicyclohexylmethan (4,95 mol), 705 g N-(β-hydroxyethyl)-ethylendiamin (6,78 mol), 123 g Wasser (6,83 mol) und 200 g Glykolmonoethylether werden vorgelegt. Innerhalb 20 Minuten werden bei einer von 40 auf 62 °C ansteigenden Temperatur 77,1 l (3,44 mol) Kohlendioxid aufgenommen. Nach Beendigung der Einleitung wird sofort mit 385 g Glykolmonoethylether verdünnt. Nach 40 Minuten Standzeit tritt pastöse Verdickung ein. Das thixotrope Produktgemisch setzt aus 50 g bei Zusatz überschüssiger 50 %iger Schwefelsäure 1,4 l $CO_2$ frei.

### Beispiel 3

1 178 g 3,3'-Dimethyl-4,4'-diamino-dicyclohexylmethan (4,95 mol), 705 g N-(β-hydroxyethyl)-ethylendiamin (6,78 mol) und 123 g Wasser (6,83 mol) werden vorgelegt. Innerhalb 20 Minuten werden nach einer von 40 auf 62 °C ansteigenden Temperatur 76 l (3,39 mol) $CO_2$ aufgenommen. Die nach einem Tag pastös verdickte Mischung wird auf 50 °C erwärmt und mit 585 g Glykolmonoethylether verdünnt. 50 g der Gesamtmischung ergeben nach Zusatz überschüssiger 50 %iger Schwefelsäure 1,4 l Kohlendioxid. Die so hergestellte Produktmischung ist bei jeder Temperatur fließfähiger als die Produkte nach Beispiel 1 und 2. Sie verdickt sich nicht nach 6-monatiger Lagerung, zeigt keine kristallinen Abscheidungen und ist phasenstabil.

### Beispiel 4

1 178 g 3,3'-Dimethyl-4,4'-diamino-dicyclohexylmethan (4,95 mol), 705 g N-(β-hydroxyethyl)-ethylendiamin (6,78 mol), 123 g Wasser (6,83 mol) und 199 g Glykolmonoethylether werden vorgelegt. Innerhalb 90 Minuten werden 76 l (3,39 mol) Kohlendioxid aufgenommen. Nach 6-stündigem Stehenlassen wird die 40 °C warme Mischung mit 386 g Glykolmonoethylether verdünnt. Die bei Raumtemperatur steife, thixotrope und bei 50 °C fließfähige Komposition ist auch nach 6-monatiger Lagerung homogen einphasig und ohne kristalline Anteile.

### Beispiel 5

326 g eines Gemisches aus 80 % 1-Methyl-2,4-diamino-cyclohexan und 20 % 1-Methyl-2,6-diamino-cyclohexan (2,67 mol), 163 g N-(β-hydroxyethyl)-ethylendiamin (1,57 mol) und 63,9 g (3,55 mol) Wasser werden vorgelegt. Innerhalb 45 Minuten werden 34,6 l (1,54 mol) Kohlendioxid aufgenommen, dabei steigt die Temperatur auf 75 °C. Die resultierende Reaktionsmischung ist eine klare Lösung mit einer Viskosität bei 20 °C von 15 000 mPa.s. Selbst nach 6-monatiger Lagerung der Komposition ist kein Antieg der Viskosität oder Ausfall kristalliner Anteile oder Phasentrennung zu beobachten.

### Beispiel 6

258 g Isophorondiamin (1,52 mol), 214 g Diethanolamin (2,04 mol) und 37,6 g Wasser (2,09 mol) werden vorgelegt und Kohlendioxid eingeleitet. Innerhalb einer Stunde werden 24,9 l Kohlendioxid (1,11 mol) aufgenommen, wobei die Innentemperatur auf 82 °C steigt. Es resultiert eine nach dem Erkalten hochviskose, thixotrope Paste ohne kristalline Anteile.

### Beispiel 7

286 g Isophorondiamin (1,68 mol), 191 g Triethanolamin (1,28 mol) und 41,8 g Wasser (2,32 mol) werden vorgelegt und Kohlendioxid eingeleitet. Innerhalb 45 Minuten werden 13,35 l Kohlendioxid (0,6 Mol) aufgenommen. Es resultiert eine nach dem Erkalten sehr hochviskose, thixotrope Paste ohne kristalline Anteile.

### Beispiel 8 (Vergleichsbeispiele)

8.1
In eine Lösung aus 50 g Isophorondiamin (0,29 mol), 5 g Wasser (0,28 mol) und 150 ml diethylether wird Kohlendioxid eingeleitet. Nach kurzer Zeit beginnt ein sich während des weiteren Einleitens verstärkender, kristalliner, farbloser Niederschlag auszufallen. Der Niederschlag wird abgesaugt, mit Diethylether gewaschen und getrocknet. Er schmilzt bei 134 bis 137 °C unter Zersetzung.

8.2

In eine Lösung aus 50 g eines Gemisches aus 80 % 1-Methyl-2,4-diamino- und 20 %-2,6 diamino-cyclohexan (0,41 mol) und 150 ml Methanol und 5 g $H_2O$ (0,28 mol) eingeleitet. Nach kurzer beginnt ein sich während des weiteren einleitens verstarkender kristalliner, farbloser Niederschlag auszufallen. Dieser Niederschlag wird abgesaugt, mit Diethylether gewaschen und getrocknet. Er schmilzt bei 140 bis 143 °C unter Zersetzung.

8.3

In eine Lösung aus 50 g 3,3'-Dimethyl-4,4'-diaminodicyclohexylmethan (0,21 mol), 5 g Wasser (0,28 mol) und 150 ml Chlorbenzol wird Kohlendioxid eingeleitet. Nach kurzer Zeit beginnt ein sich während des weiteren Einleitens verstärkender, kristalliner, farbloser Niederschlag auszufallen. Dieser Niederschlag wird abgesaugt, mit Diethylether gewaschen und getrocknet. Er schmilzt bei 142-150 °C unter Zersetzung.

Beispiel 9

500 g 1,6,11-Triamino-undecan (2,487 mol), 45 g eines Umsetzungsproduktes aus Ethylendiamin und Propylenoxid im Molverhältnis 1 : 1 (0,43 mol), 150 g Wasser (8,33 mol) und 2 l Ethanol werden vorgelegt. Bei einer Innentemperatur von 30 bis 40 °C, die durch externes Kühlen mit einem Eisbad in diesem Bereich gehalten wird, wird solange Kohlendioxid eingeleitet, bis die Kohlendioxidaufnahme praktisch beendet ist.

Nach dem Abdestillieren der flüchtigen Bestandteile (bei 70 °C/20 mbar) hinterbleibt ein transparentes, hochviskoses Öl. Eine 50 %ige Lösung in Isopropanol ist klar und weist eine Viskosität von 39 000 mPa.s bei 50 °C auf und verdickt sich nicht bis nach 6-monatiger Lagerung. 50 g der Isopropanollösung entwickeln nach Zugabe überschüssiger 50 %iger Schwefelsäure 1,5 l Kohlendioxid.

Beispiel 10

364 g Bis-(4-amino-cyclohexyl)-propan-(2,2) (1,53 mol), 832 g N-(β-hydroxyethyl)-ethylendiamin (8,00 mol) und 180 g (10 mol) Wasser werden vorgelegt und bei einer Innentemperatur von maximal 30 °C (externe Kühlung) mit Kohlendioxid begast. Es wird solange $CO_2$ eingeleitet, bis praktisch nichts mehr aufgenommen wird. Die anfangs niederviskose Komposition verdickt sich nach 1 Woche auf ca. 100 000 mPa.s/23 °C. Dabei sind jedoch keine kristallinen Kompartimente zu beobachten. 50 g der Kohlensäure-komposition entwickeln 7,4 l Kohlendioxid auf Zugabe von überschüssiger 50 %iger Schwefelsäure.

Beispiel 11

1 178 g Bis-(3-methyl-4-amino-cyclohexyl)-methan (4,95 mol), 705 g N-(β-hydroxyethyl)-ethylendiamin (6,78 mol), 123 g Wasser (6,83 mol) werden vorgelegt. Innerhalb von 20 Minuten werden bei einer von 20 auf 62 °C ansteigenden Temperatur 76 l $CO_2$ (3,39 mol) aufgenommen. 2 Stunden nach Beendigung der $CO_2$-Einleitung wird das noch dünnflüssige Reaktionsgemisch mit 585 g i-Butanol verdünnt. 50 g der Gesamtmischung ergeben nach Zusatz überschüssiger 50 %iger Schwefelsäure 1,4 l Kohlendioxid. Die so hergestellte Produktmischung ist bei jeder Temperatur fließfähiger als die Produkte nach Beispiel 1, 2 und 3. Sie verdickt sich auch nicht nach 6-monatiger Lagerung, zeigt keine kristallinen Abscheidungen und ist phasenstabil.

Beispiel 12

345 g 3,3',5,5'-Tetraethyl-4,4'-diaminodicyclohexylmethan (1,07 mol), 118 g eines Umsetzungsproduktes aus Propylendiamin und Ethylenoxid im Molverhältnis 1 : 1 (1 mol) und 56,6 g (3,14 mol) Wasser werden vorgelegt und bei 23 bis 30 °C unter externer Kühlung mit 62 g Kohlendioxid begast, bis die Kohlendioxidaufnahmegeschwindigkeit sehr gering geworden ist. Es resultiert eine klare, mittelviskose Kohlensäuresalz-Komposition (19 000 mPa.s/23 °C), die nach halbjähriger Lagerung keine Verdickung, keine Abscheidung des kristallinen Kompartimentes und keine Phasentrennung zeigt. 50 g der Kohlensäuresalz-Komposition ergeben nach Zusatz von überschüssiger 50 %iger Schwefelsäure 4,0 l Kohlendioxid.

Beispiel 13

1 997 g 3,3'-Dimethyl-4,4'-diamino-dicyclohexylmethan (8,39 mol), 1 280 g eines rohen Umsetzungsproduktes von Ethylendiamin und Ethylenoxid (Molverhältnis 1 : 1), das 6,4 % Wasser, 10,2 % Ethylendiamin, 51,4 % des Monoethoxylierungsproduktes, 12,3 % des Di- und 19,6 % eines Triethoxylierungsproduktes enthält, und 127 g Wasser (7,06 mol) werden vorgelegt. Bei einer Innentemperatur von 50 bis 80 °C werden binnen 45 Minuten 98,6 l (4,40 mol) Kohlendioxid aufgenommen. Nach 3 Stunden werden in die niederviskose, klare Mischung 950 g Isobutanol eingerührt. Die bei Raumtemperatur hochviskose, bei 50 °C leicht fließfähige Produktmischung verdickt sich nach halbjähriger Lagerung nicht, zeigt keine kristallinen Ausscheidungen und entwickelt auf Zugabe überschüssiger 50 %iger Schwefelsäure aus 50 g 1,5 l Kohlendioxid.

Beispiel 14

Vergleich zwischen Carbonat- und Carbamat-Bildung

1) Carbonat des Ethylendiamins (erfindungsgemäß — in Gegenwart von Wasser)

120 g Ethylendiamin (2 mol), 72 g Wasser (4 mol) und 500 ml Methanol werden vorgelegt und bei einer maximalen Innentemperatur von 30 °C unter externer Kühlung mit Kohlendioxid bis zur Sättigung begast. Das Produkt kristallisiert kurz nach Beendigung der Kohlendioxideinleitung aus. Es wird abgesaugt, mit 50 ml Methanol nachgewaschen und bei 23 °C/20 mbar getrocknet. Es werden 180 g eines farblosen, kristallinen Produktes erhalten. Schmelzpunkt : 161-165 °C (unter Zersetzung).
Gasentwicklung aus 50 g Substanz bei Zugabe überschüssiger 50 %iger Schwefelsäure : 11,85 l $CO_2$.
Theoretische Gasentwicklung von jeweils 50 g :

| | |
|---|---|
| $H_2NCH_2CH_2NH_2 \cdot CO_2$ | 10,77 l (MG : 104) |
| $H_2NCH_2CH_2NH_2 \cdot 2\,CO_2$ | 15,1 l (MG : 148) |
| $H_2NCH_2CH_2NH_2 \cdot H_2O \cdot CO_2$ | 9,18 l (MG : 122) |
| $H_2NCH_2CH_2NH_2 \cdot H_2O \cdot 2\,CO_2$ | 13,5 l (MG : 166) |
| $H_2NCH_2CH_2NH_2 \cdot 2\,H_2O \cdot 2\,CO_2$ | 12,17 l (MG : 184)[*] |

[*] wahrscheinlichste Zusammensetzung

Löslichkeitsuntersuchungen : (Carbonat)

| Lösungsmittel | 23°C | 80°C | Rückfluß-temperatur |
|---|---|---|---|
| Wasser (Kp 100°C) | ++ | ++ | ++ |
| Dimethylformamid (Kp 153°C) | - | - | - |
| Dioxan (Kp 101°C) | - | - | - |
| i-Butanol (Kp 108°C) | - | - | + |

− keine Löslichkeit
+ mäßige Löslichkeit
++ gute Löslichkeit

2) Carbamat des Ethylendiamins (ohne Wasser)

120 g Ethylendiamin (2 mol) (über KOH getrocknet und destilliert) werden in 500 ml wasserfreiem Methanol vorgelegt und mit Kohlendioxid bis zur Sättigung begast. Trotz externer Kühlung kommt dabei das Methanol zum Sieden. Das Produkt kristallisiert beim Abkühlen aus, wird abfiltriert, mit 50 ml Methanol gewaschen und bei 23 °C/20 mbar getrocknet. 174 g eines farblosen, kristallinen Produktes werden erhalten.
Die Mutterlauge wurde nicht aufgearbeitet. Schmelzpunkt : ab 100 °C Sintern, Zersetzungspungt 160 °C.
Gasentwicklung von 50 g Substanz bei Zugabe überschüssiger 50 %iger Schwefelsäure : gef. 10,6 l $CO_2$.
Theoretische Gasentwicklung aus jeweils 50 g :

| | |
|---|---|
| $H_2CH_2CH_2NH_2 \cdot CO_2$ | 10,77 l (MG : 104)[*] |
| $H_2NCH_2CH_2NH_2 \cdot 2\,CO_2$ | 15,1 l (MG : 148) |
| $H_2NCH_2CH_2NH_2 \cdot H_2O \cdot CO_2$ | 9,18 l (MG : 122) |
| $H_2NCH_2CH_2NH_2 \cdot H_2O \cdot 2\,CO_2$ | 13,5 l (MG : 166) |
| $H_2NCH_2CH_2NH_2 \cdot 2\,H_2O \cdot 2\,CO_2$ | 12,17 l (MG : 184) |

[*] wahrscheinlichste Zusammensetzung

Löslichkeitsuntersuchungen (Carbamat)

| Lösungsmittel | 23°C | 100°C | Rückfluß-temperatur |
|---|---|---|---|
| Wasser | + | + | + |
| Dimethylformamid | − | ++ | ++ |
| Dioxan | − | + | + |
| i-Butanol | − | ++ | ++ |

Beispiel 15

(Vergleich Carbonat/Carbamat-Bildung)

1) Carbonat (in Gegenwart von Wasser)

250 g Hexamethylendiamin (2,16 mol), 77,7 g Wasser (4,32 mol) und 500 ml Methanol werden vorgelegt und bei einer max. Innentemperatur von 30 °C (externe Kühlung) bis zur Sättigung (90 Minuten) mit Kohlendioxid begast. Der Kohlensäuresalzniederschlag beginnt kurz nach Beginn der Reaktion und verstärkt sich während der Begasung. Der kristalline, farblose Niederschlag wird abgesaugt, mit 100 ml Methanol nachgewaschen und bei 23 °C/20 nbar getrocknet. Es werden 300 g Produkt erhalten, Mutterlauge und Waschwasser werden nicht aufgearbeitet. Schmelzpunkt : 158-165 °C, Gasentwicklung aus 50 g Substanz bei Zugabe überschüssiger 50 %iger Schwefelsäure : gef. 8,14 l $CO_2$.

Theoretische Gasentwicklung aus jeweils 50 g :

| | |
|---|---|
| $H_2N-CH_2{-}_6NH_2 \cdot CO_2$ | 7,0 l (MG : 160) |
| $H_2N-CH_2{-}_6NH_2 \cdot 2\,CO_2$ | 10,98 l (MG : 204) |
| $H_2N-CH_2{-}_6NH_2 \cdot H_2O \cdot CO_2$ | 6,29 l (MG : 178) |
| $H_2N-CH_2{-}_6NH_2 \cdot H_2O \cdot 2\,CO_2$ | 10,0 l (MG : 224) |
| $H_2N-CH_2{-}_6NH_2 \cdot 2\,H_2O \cdot 2\,CO_2$ | 8,42 l (MG : 266)[*] |

[*] wahrscheinlichste Zusammensetzung

Löslichkeitsuntersuchungen (Carbonat)

| Lösungsmittel | 23°C | 80°C | Rückfluß-temperatur |
|---|---|---|---|
| Wasser | ++ | ++ | ++ |
| Dimethylformamid | − | + | + |
| Dioxan | − | − | − |
| i-Butanol | − | + | + |

2) Carbamat (ohne Wasser)

250 g Hexamethylendiamin (2,16 mol) und 500 g Methanol werden vorgelegt und mit Kohlendioxid bis zur Sättigung begast. Trotz externer Eisbadkühlung kommt dabei das Methanol zum Sieden. Das Produkt kristallisiert erst beim Abkühlen aus. Es wird abgesaugt, mit 100 ml Methanol gewaschen und bei 23 °C/20 mbar getrocknet. Mutterlauge und Wazschlösung werden nicht aufgearbeitet. Es werden 316 g eines farblosen, kristallinen Produktes mit einem Schmelzpunkt von 163 °C mit vorheriger Sublimation oder Zersetzung erhalten. Gasentwicklung aus 50 g Substanz bei Zugabe überschüssiger 50 %iger Schwefelsäure : gef. 7,3 l $CO_2$. Bei Vergleich mit der theoretischen Gasentwicklung verschdiedenartiger Zusammensetzungen (s. o.) ergibt sich als wahrscheinlichste Zusammensetzung $NH_2-CH_2{-}_6NH_2 \cdot CO_2$.

Löslichkeitsuntersuchungen (Carbamat)

| Lösungsmittel | 23°C | 80°C | Rückfluß-temperatur |
|---|---|---|---|
| Wasser | + | + | + |
| Dimethylformamid | + | ++ | ++ |
| Dioxan | - | + | + |
| i-Butanol | - | ++ | ++ |

Diese Beispiele zeigen, daß sich die durch Umsetzung von Kohlendioxid mit Ethylendiamin und 1.6-Diaminohexan mit bzw. ohne Gegenwart von Wasser entstehenden Kohlensäureaddukte (Carbonate bzw. Carbamate) in analytischer Hinsicht und in ihrem Löslichkeitsverhalten deutlich voneinander unterscheiden.

Verwendungsbeispiele

Beispiel 16

Verwendung einer erfindungsgemäßen Beschichtungskomposition zur Herstellung eines Zwischenstrichs und Haftstrichs

a) Deckstrich aus Einkomponenten-Polyurethan (nicht erfindungsgemäß)

Zur Herstellung des Deckstrichs dient eine 25 %ige Lösung eines Polycarbonat-Polyesterurethans in Dimethylformamid mit einer Viskosität von 10 000 mPa.s/25 °C. Es wird durch Schmelzkondensation von 1 000 g (0,5 mol) Hexandiolpolycarbonat, 1 125 g (0,5 mol) eines Butandiol-1,4-adipats, 270 g (3,0 mol) Butandiol-1,4 und der hierzu äquivalenten Menge an 4,4'-Diisocyanatodiphenylmethan hergestellt. Die Lösung des aromatischen Einkomponenten-Polyurethans in Dimethylformamid wird mit 8 % einer handelsüblichen Pigmentpaste pigmentiert. Auf einer Beschichtungsmaschine wird mittels Walzenrakel die pigmentierte Deckstrichlösung auf ein Trennpapier aufgerakelt (Auftragsmenge naß 120 g/m²). Das bei der Passage durch den ersten Kanal verdampfte Dimethylformamid wird einer Rückgewinnungsanlage zugeführt.

b) Zwischenstrich (erfindungsgemäß)

Am zweiten Streichwerk wird als Zwischenstrich eine Topftreibschaumpaste in einer Menge von 160 g/m² aufgetragen. Die auf der Basis von blockierten NCO-Präpolymeren kompoundierte Schaumpaste wird mit einem Vernetzergemisch gemäß Beispiel 1 vernetzt und getrieben.

Zusammensetzung der Topfschaumpaste :

Es wird ein Butanonoxim-blockiertes NCO-Präpolymer aus 2 000 g (1,0 mol) eines Polyethers aus Propylenoxid, 1 000 g (0,5 mol) eines Polyesters aus Hexandiol-1,6, Neopentylglykol und Adipinsäure, 775 g (3,1 mol) 4,4'-Diisocyanatodiphenylmethan und 261 g (3,0 mol) Butanonoxim in 450 g Methylglykolacetat hergestellt, 89,5 Teile blockiertes NCO-Präpolymer, 0,5 Teile eines Silikons als Schaumstabilisator, 10 g Talkum, 5 g Pigmentpaste und 7,3 g eines Vernetzergemisches gemäß Beispiel 1. Der Zwischenstrich wird im zweiten Kanal zum Treiben und gleichzeitigen Vernetzen auf 120-140-160 °C bei einer Gesamtverweildauer von etwa 90 bis 180 Sekunden getrocknet. Der als Zwischenstrich zum Beschichtungsaufbau erhaltene Schaum hat ein Raumgewicht von ca. 600 g/l.

c) Haftstrich (erfindungsgemäß)

Als Haftstrich dient die vorstehend beschriebene, auch als Zwischenstrich verwendete Topftreibschaumpaste, die in einer Menge von 60 g/m² auf die Zwischenschicht aufgetragen wird, in einer ersten Kanalpassage bei 135 °C einer Vorreaktion unterworfen und nach Zukaschieren eines Baumwollgewebes bei 150 bis 160 °C vernetzt wird.

Beispiel 17

Verwendung einer Beschichtungskomposition gemäß Erfindung zur Herstellung von Zwischenstrich und Haftstrich

a) Deckstrich (nicht erfindungsgemäß)

Zur Herstellung des Deckstrichs dient ein 90 %iges high-solid-PUR eines blockierten NCO-Präpolymers mit 3,3 % NCO-Gehalt, hergestellt gemäß der europäischen Patentanmeldung 13 890, als Vorpolymerisat B) beschrieben. Die Deckstrichpaste besteht aus 1 280 des blockierten NCO-Präpolymeren, 119 g 3,3'-Dimethyl-4,4'-diaminodicyclohexylmethan, 140 g einer handelsüblichen Pigmentpaste, 3 g Polydimethylsiloxanöl und 30 g Silikatfüllstoff. Die Streichpaste (4 000 mPa.s/20 °C) wird mittels Walzenrakel auf ein Trennpapier mit einer Auflage von 70 g/m² gestrichen und in einem Trockenkanal bei 140 bis 160 °C in 2 Minuten ausgehärtet.

b) Zwischenstrich (erfindungsgemäß)

Am zweiten Streichwerk werden als Zwischenstrich 200 g/m² Topftreibschaumpaste aufgerakelt. Die auf Basis des in Beispiel 16 beschrieben blockierten NCO-Präpolymeren compoundierte Schaumpaste wird mit dem Vernetzergemisch gemäß Beispiel 3 vernetzt und gestrichen.

Zusammensetzung der Topfschaumpaste

89,5 Teile blockiertes NCO-Präpolymer mit einem NCO-Gehalt von 3,0 %, aufgebaut gemäß Beispiel 16, 0,5 Teile Silikonöl als Schaumstabilisator, 10 Teile Talkum und 5 Teile Pigmentpaste, sowie 9,4 Teile Reaktionsgemisch gemäß Beispiel 2 als Vernetzer und Treibmittel.

Die Temperaturführung zum Treiben und Vernetzen des Schaumes wird wie in Beispiel 16 durchgeführt. Das Raumgewicht beträgt 625 g/l.

c) Haftstrich (erfindungsgemäß)

Als Haftstrich dient die vorstehend beschriebene, auch für den Zwischenstrich verwendete, Topftreibschaumpaste. Die Verarbeitung erfolgt wie im Beispiel 16.

### Beispiel 18

Verwendung einer Beschichtungskomposition gemäß Erfindung zur Herstellung von Zwischenstrich und Haftstrich

a) Deckstrich (nicht erfindungsgemäß)

Zur Herstellung des Deckstrichs dient eine pigmentierte 30 %ige Lösung eines aliphatischen Einkomponenten-Polyesterurethans in Toluol/Isopropanol/Ethylenglykol = 29 : 29 : 12 mit einer Viskosität von 22 000 mPa.s/25 °C. Das Polyurethan wird durch Umsetzung eines NCO-Präpolymeren aus 1 700 g (1 mol) eines aus Hexandiol-1,6, Neopentylglykol und Adipinsäure hergestellten Polyesters und 490 g (2,2 mol) Isophorondiisocyanat mit 205 g (1,2 mol) Isophorondiamin in Lösung aufgebaut. Zwischenstrich und haftstrich sind wie in Beispiel 16 ausgebildet.

### Beispiel 19

Verwendung einer Treibschaumpaste gemäß Erfindung als Haftstrich

a) Deckstrich (nicht erfindungsgemäß)

Zur Herstellung des Deckstrichs dient eine 30 %ige Lösung eines Polyesterurethans in Dimethylformamid/Methylethylketon (1 : 1) mit einer Viskosität von 30 000 mPa.s/25 °C. Das Polyesterurethan besteht aus 1 800 g (2 mol) eines Butandiol-1,4-adipats, 174 g (1 mol) Toluylendiisocyanat, 186 g (3 mol) Ethylenglykol und der hierzu äquivalenten Menge 4,4'-Diisocyanatodiphenylmethan (1 000 g). Nach dem Pigmentieren wird auf ein Trennpapier unter bekannten Bedingungen ein Deckstrich von 30 g/m² Feststoffauflage erzeugt.

b) Zwischenstrich (nicht erfindungsgemäß)

Als Zwischenstrich werden 200 g/m² einer Topftreibschaumpaste aus 1 280 g eines blockierten NCO-Präpolymers (Herstellung gemäß EP-A 13 890, s. Vorpolymerisat B)), 119 g 3,3'-Dimethyl-4,4'-diaminodicyclohexylmethan, 20 g Diphenyl-disulfon-3,3'-disulfonhydrazid, 3,0 g Dimethylpolysiloxan, 70 g Silikatfüllstoff aufgerakelt. Die Temperaturführung zum Treiben und Vernetzen des Schaums bei der Kanalpassage (ca. 2-3 Minuten) ist 120-150-170 °C. Der vernetzte Schaum hat ein Raumgewicht von 500 g/l.

14

c) Haftstrich (erfindungsgemäß)

Als Haftstrich (60 g/m$^2$) wird ein Topftreibschaum der folgenden Zusammensetzung verwendet, in den nach dem Trockenkaschierverfahren nach Beispiel 16 das textile Substrat kaschiert wird : 89,5 Teile blockiertes NCO-Präpolymer, hergestellt nach Beispiel 16b), 0,5 Teile eines Silikons als Schaumstabilisator, 10 Teile Talkum, 5 Teile Pigmentpaste und 9,4 Teile eines Vernetzergemisches gemäß Beispiel 4.

Ersetzt man das Vernetzergemisch gemäß Beispiel 4 durch 9,4 g des Vernetzergemischs nach Beispiel 11, so werden etwa gleichartige Eigenschaften erhalten.

Beispiele 20, 21

Verwendung einer Treibschaumkomposition gemäß Erfindung als Haftstrich

Das in Beispiel 19c) verwendete Vernetzergemisch gemäß Beispiel 4 läßt sich mit gutem Erfolg durch 10,2 g gemäß Beispiel 9 oder 7,3 g gemäß Beispiel 10 hergestellte Vernetzergemische ersetzen.

Beispiel 22

Verwendung einer Beschichtungskomposition gemäß Erfindung als Haftstrich ohne Zwischenstrich

a) Deckstrich (nicht erfindungsgemäß)

Zur Herstellung des Deckstrichs dient eine verdickte pigmentierte 40 %ige PUR-Dispersion in Wasser. 1 700 g (1 mol) eines Mischpolyesters aus Hexandiol-1,6, Neopentylglykol und Adipinsäure werden mit 303 g (1,8 mol) Hexan-1,6-diisocyanat und 152 g (0,8 mol) Ethylendiamin-ethylsulfonsäure-Natriumsalz als Kettenverlängerer zum Polyesterurethanharnstoff aufgebaut.

b) Haftstrich (erfindungsgemäß)

Als Haftstrich wird eine Topftreibschaumpaste gemäß Beispiel 19c) mit 80 g/m$^2$ Auftrag verwendet, die zusätzlich 2,0 g hochdisperse Kieselsäure enthält. Die textile Bahn wird ohne Vorreaktion des Haftstrichs einkaschiert, sodann bei 120-150-170 °C in der Kanalpassage zur Reaktion gebracht.

Beispiel 23

Verwendung einer Beschichtungskomposition gemäß Erfindung als Deckstrich und als Haftstrich ohne Zwischenstrich

Auf ein geprägtes Trennpapier wird Topftreibschaumpaste gemäß Beispiel 16b) in einer Auflage von 80 g/m$^2$ aufgerakelt und bei 120-150-170 °C vernetzt. Auf diesen « Schaumdeckstrich » wird mit der gleichen Streichpaste ein Haftstrich von 60 g/m$^2$ aufgerakelt und nach dem Trocknenkaschierverfahren gemäß Beispiel 16 mit einem textilen Substrat kaschiert.

Beispiel 24

Auf ein geprägtes Trennpapier wird Topftreibschaumpaste der Zusammensetzung gemäß Beispiel 16b) in einer Auflage von 100 g/m$^2$ aufgerakelt und im Sinne des Trockenkaschierverfahrens laut Beispiel 16 mit einer textilen Bahn kaschiert. Vorreaktion : 135 °C, Vernetzungsreaktion nach dem Kaschieren : 150-160 °C.

Beispiel 25

a) Haftstrich (erfindungsgemäß)

Ein Polyestergewebe von ca. 200 g/m$^2$ wird mit einer Topftreibschaumpaste, die in Beispiel 19c) als Haftstrich verwendet wurde, grundiert. Auflage 70 g/m$^2$, Vernetzungstemperatur im Kanal ansteigend 120-150-170 °C.

b) Deckstrich (nicht erfindungsgemäß)

Nach der Grundierung wird eine kompakte high-solid-PUR-Schicht mit 120 g/m$^2$ aufgerakelt. Vernetzung : 120-150-170 °C. Die Streichpaste hat folgende Zusammensetzung : 1 000 g blockiertes NCO-Präpolymer mit einem NCO-Gehalt von 3,3 %, hergestellt nach EP-A 13 890, Vorpolymerisat B), 5,0 g eines Silikons und 10 g eines Polyacrylats als Verlaufmittel, 15 g einer handelsüblichen Pigmentpaste und 90 g 3,3'-Dimethyl-4,4'-diamino-dicyclohexylmethan als Vernetzer.

15

Beispiel 26

Verwendung einer Topfschaumkomposition gemäß Erfindung als Zwischenstrichpaste

## a) Deckstrich (nicht erfindungsgemäß)

Mit der in Beispiel 16a) beschriebenen Polyurethanlösung wird auf Trennpapier ein Deckstrichfilm von 30 g/m² Feststoff erzeugt.

## b) Zwischenstrich (erfindungsgemäß)

Auf dem obligen Deckstrich wird ein Zwischenstrich von 200 g/m² einer Topftreibschaumpaste folgender Zusammensetzung gerakelt : 89,5 Teile blockiertes NCO-Präpolymer wie im Beispiel 16b) beschrieben, mit einem NCO-Gehalt von 3,0 %, 0,5 Teile Silikon als Schaumstabilisator, 10 Teile Talkum und 5 Teile Pigmentpaste, 9,4 Teile Reaktionsgemisch gemäß Beispiel 12 als Vernetzer und Treibmittel.

Temperaturführung zum Treiben und Vernetzen des Schaums : 120-140-160 °C, Verweilzeit im Kanal : 90 Sekunden.

Anstelle von 9,4 g Vernetzer-Treibmittel gemäß Beispiel 12 können auch 7,7 g Vernetzer-Treibmittel gemäß Beispiel 13 verwendet werden. Die Raumgewichte liegen bei ca. 650 g/l.

## c) Haftstrich (nicht erfindungsgemäß)

Als Haftstrich dient eine 35 %ige Polyurethanlösung in Dimethylformamid/Methylethyketon/Toluol (30 : 30 : 40), wobei das Polyurethan aus 2 000 g eines Polyesters aus Polypropylenoxid, 780 g Diisocyanatodiphenylmethan und 180 g Butandiol-1,4 besteht.

Der Haftstrich wird in einer Naßauflage von ca. 120 g/m² auf den geschäumten Zwischenstrich aufgerakelt, Spaltlederstücke werden unter leichtem Andruck in den nassen Haftstrich eingelegt, das Lösemittelgemisch mit Umluft von 80 bis 90 °C verdampft. Das zugerichtete Spaltleder zeigt hervorragende Narbung und Griff.

Verwendungsbeispiele mit nicht-blockierten NCO-Präpolymeren

Beispiel 27

In 5 Teile des Produktes aus Beispiel 7 (OH-Zahl 1245) werden 0,3 Teile Dibutylzinndilaurat und 0,6 Teile Diazabicycloundecen gelöst. Diese Mischung wird zu 115 Teilen eines NCO-Präpolymers, das aus Isophorondiisocyanat und einem Polypropylenglykol der durchschnittlichen Molmasse 2 000 hergestellt wurde und einen NCO-Wert von 4 % aufweist, gegeben und 30 Sekunden mit einem Schnellrührer intensiv vermischt (Kennzahl 100, d. h. äquivalente Mengen NCO/Kettenverlängerer).

Der Freischaum weist eine Startzeit von ca. 60 Sekunden auf und wird durch 10-minütige Temperung auf 80 °C gehärtet. Der wenig elastische Schaum weist eine gleichmäßige Porenstruktur auf und hat gute Weiterreißfestigkeit.

Beispiel 28

In 5 Teile des Produktes aus Beispiel 13 (OH-Zahl 1052), wie es vor der Vermischung mit Isobutanol erhalten wurde, werden 0,3 Teile Dibutylzinndilaurat und 0,6 Teile Diazabicycloundecen gelöst. Diese Mischung wird zu 98 Teilen des obigen NCO-Präpolymers gegeben und 50 Sekunden mit einem Schnellrührer bei Raumtemperatur intensiv vermischt. Der Freischaum weist eine Startzeit von 75 Sekunden auf und wird 10 Minuten/80 °C gehärtet. Der weiche Schaum weist keine Restklebrigkeit auf, hat befriedigende Elastizität und sehr gute Weiterreißfestigkeit.

## Ansprüche

1. Nicht-kristalline, flüssige oder fließfähige Polyamin-Kohlensäuresalz-Kompositionen aus Polyaminen und $CO_2$, dadurch gekennzeichnet, daß sie enthalten :

1) aliphatische oder cycloaliphatische, primäre und/oder sekundäre Aminogruppen aufweisende Polyamine ;
2) aliphatische oder cycloaliphatische Hydroxyamine mit mindestens einer Hydroxygruppe und mindestens einer Aminogruppe im Mengenverhältnis von 1) zu 2) = 95 : 5 bis 10 : 90 Gew.-%,

3) gegebenenfalls Verdünner in Form organischer Lösungsmittel mit einem Siedepunkt unter 160 °C und einer zumindest teilweisen Löslichkeit in Wasser in Mengen bis zu 90 % Lösungsmittel in der Gesamtmischung 1) bis 6),

4) gegebenenfalls bekannte Hilfs- und Zusatzstoffe,

5) 0,01 mol bis 5 mol Wasser pro Aminäquivalent, wobei die Wassermenge mindestens 1 mol Wasser pro 1 mol $CO_2$ betragen muß, und

6) 0,01 bis 0,99 mol $CO_2$ pro Aminäquivalent.

2. Polyamin-Kohlensäuresalz-Kompositionen nach Anspruch 1, dadurch gekennzeichnet, daß sie aliphatische oder cycloaliphatische Polyamine mit 2 bis 4 primären Aminogruppen enthalten.

3. Kompositionen nach Ansprüchen 1 und 2, dadurch gekennzeichnet, daß sie als Hydroxyamine 2) Mono-bis Tris-hydroxyalkylpolyamine enthalten.

4. Kompositionen nach Ansprüchen 1 bis 3, dadurch gekennzeichnet, daß die Kompositionen die Polyamine 1) und Hydroxyamine 2) im Mengenverhältnis von 80 : 20 bis 25 : 75 Gew.-% enthalten.

5. Kompositionen nach Ansprüchen 1 bis 4, dadurch gekennzeichnet, daß sie 0,1 bis 1,0 mol Wasser pro Aminäquivalent enthalten.

6. Kompositionen nach Ansprüchen 1 bis 5, dadurch gekennzeichnet, daß sie 0,05 bis 0,8 mol $CO_2$ pro Aminäquivalent und mindestens 1 mol Wasser pro 1 mol $CO_2$ enthalten.

7. Verfahren zur Herstellung von nicht-kristallinen, flüssigen oder fließfähigen Polyamin-Kohlensäuresalz-Kompositionen aus Polyaminen und $CO_2$, dadurch gekennzeichnet, daß man

1) aliphatische oder cycloaliphatische, primäre und/oder sekundäre Aminogruppen aufweisende Polyamine,

2) aliphatische oder cycloaliphatische Hydroxyamine mit mindestens einer Hydroxygruppe und mindestens einer Aminogruppe
im Mengenverhältnis von 1) zu 2) = 95 : 5 bis 10 : 90 Gew.-%,

3) gegebenenfalls in Gegenwart von Verdünnern in Form organischer Lösungsmittel mit einem Siedepunkt unter 160 °C und einer zumindest teilweisen Löslichkeit in Wasser in Mengen bis zu 90 Gew.-% Lösungsmittel in der Gesamtmischung 1) bis 6),

4) gegebenenfalls in Gegenwart von an sich bekannten Hilfs- und Zusatzstoffen der Polyurethanchemie,

5) mit 0,01 bis 5 mol Wasser pro Aminäquivalent vermischt, wobei die Wassermenge mindestens 1 mol Wasser pro 1 mol $CO_2$ betragen muß, und mit

6) 0,01 bis 0,99 mol $CO_2$ pro Aminäquivalent versetzt.

8. Verfahren nach Anspruch 7, dadurch gekennzeichnet, daß man

1) primäre Diamine,

2) mit Mono- und Di-(β-hydroxyalkyl)-alkylendiaminen im Mengenverhältnis von 80 : 20 bis 25 : 75,

3) gegebenenfalls in Gegenwart von Verdünnern und

4) gegebenenfalls in Gegenwart von an sich bekannten Hilfs- und Zusatzstoffen,

5) mit 0,1 bis 1,0 mol Wasser pro Aminäquivalent vermischt, und mit

6) 0,1 bis 0,5 mol $CO_2$ pro Aminäquivalent versetzt.

9. Verwendung der nicht-kristallinen Polyamin-Kohlensäuresalz-Kompositionen zur Herstellung von gegebenenfalls geschäumten Polyurethanharnstoffen aus

A) durchschnittlich 2 bis 4, gegebenenfalls blockierte, aromatische und/oder aliphatische und/ oder cycloaliphatische NCO-Gruppen aufweisenden NCO-Präpolymeren mit einem NCO-Gehalt von 1 bis 24 Gew.-%,

B) Kettenverlängerungsmitteln und/oder Vernetzern sowie gegebenenfalls

C) an sich bekannten Hilfs- und Zusatzstoffen,

dadurch gekennzeichnet, daß man
als Komponente B) die in Anspruch 1 bis 6 charakterisierten nicht-kristallinen Polyamin-Kohlensäuresalz-Kompositionen zu mindestens 50 Äquivalentprozent, neben gegebenenfalls bis zu 50 Äquivalentprozent an üblichen Kettenverlängerungsmitteln und/oder Vernetzern einsetzt.

10. Verwendung der nicht-kristallinen Polyamin-Kohlensäure-Adduktgemische zur Herstellung von gegebenenfalls geschäumten Polyurethanharnstoffen aus

A) durchschnittlich 2 bis 4 blockierte aromatische und/oder aliphatische und/oder cycloaliphatische NCO-Gruppen aufweisenden NCO-Präpolymeren ;

B) Kettenverlängerungsmitteln und/oder Vernetzern, sowie gegebenenfalls

17

**0 078 436**

C) an sich bekannten Hilfs- und Zusatzstoffen,

dadurch gekennzeichnet, daß man als Komponente B) die in Anspruch 1 bis 6 charakterisierten nicht-kristallinen Polyamin-Kohlensäuresalz-Kompositionen einsetzt.

**Claims**

1. Non-crystalline, liquid or fluid polyamine/carbonic acid salt compositions from polyamines and $CO_2$, characterised in that they contain :

1) aliphatic or cycloaliphatic, polyamines having primary and/or secondary amino groups ;
2) aliphatic or cycloaliphatic hydroxyamines having at least one hydroxyl group and at least one amino group
in a quantitative ratio of 1) to 2) = from 95 : 5 to 10 : 90 % by weight,
3) optionally, diluents in the form of organic solvents having a boiling point below 160 °C and at least partial solubility in water, in quantities of up to 90 % of solvent in the total mixture of 1) to 6),
4) optionally, known auxiliary agents and additives,
5) from 0.01 mol to 5 mol of water per amine equivalent, wherein the quantity of water must be at least 1 mol of water per mol of $CO_2$,
and
6) from 0.01 to 0.99 mol of $CO_2$ per amine equivalent.

2. Polyamine/carbonic acid salt compositions according to claim 1, characterised in that they contain aliphatic or cycloaliphatic polyamines having from 2 to 4 primary amino groups.
3. Compositions according to claims 1 and 2, characterised in that they contain mono- to tris-hydroxyalkylpolyamines as hydroxyamines 2).
4. Compositions according to claims 1 to 3, characterised in that the compositions contain the polyamines 1) and hydroxyamines 2) in a quantitative ratio of from 80 : 20 to 25 : 75 % by weight.
5. Compositions according to claims 1 to 4, characterised in that they contain from 0.1 to 1.0 mol of water per amine equivalent.
6. Compositions according to claims 1 to 5, characterised in that they contain from 0.05 to 0.8 mol of $CO_2$ per amine equivalent and at least one mol of water per mol of $CO_2$.
7. Process for the preparation of non-crystalline, liquid or fluid polyamine/carbonic acid salt compositions from polyamines and $CO_2$, characterised in that

1) aliphatic or cycloaliphatic polyamines having primary and/or secondary amino groups and
2) aliphatic or cycloaliphatic hydroxyamines having at least one hydroxyl group and at least one amino group
in a quantitative ratio of 1) to 2) = from 95 : 5 to 10 : 90 % by weight,
3) optionally in the presence of diluents in the form of organic solvents having a boiling point below 160 °C and at least partial solubility in water, in quantities of up to 90 % by weight of solvent in the total mixture of 1) to 6),
4) optionally in the presence of known auxiliary agents and additives used in polyurethane chemistry are mixed with
5) from 0.01 to 5 mol of water per amine equivalent, wherein the quantity of water must be at least 1 mol of water per mol of $CO_2$, and
6) from 0.01 to 0.99 mol of $CO_2$ per amine equivalent are added.

8. Process according to claim 7, characterised in that

1) primary diamines and
2) mono- and di-($\beta$-hydroxyalkyl)-alkylene diamines in a quantitative ratio of from 80 : 20 to 25 : 75,
3) optionally in the presence of diluents and
4) optionally in the presence of known auxiliary agents and additives,
5) are mixed with from 0.1 to 1.0 mol of water per amine equivalent and
6) from 0.1 to 0.5 mol of $CO_2$ per amine equivalent is added thereto.

9. Use of the non-crystalline polyamine/carbonic acid salt compositions for the preparation of optionally foamed polyurethane ureas from

A) NCO prepolymers with an NCO content of from 1 to 24 % by weight having an average of from 2 to 4, optionally blocked aromatic and/or aliphatic and/or cycloaliphatic NCO groups,
B) chain lengthening agents and/or cross-linking agents, and optionally
C) known auxiliary agents and additives,

18

characterised in that as component B) at least 50 equivalent percent of the non-crystalline polyamine/carbonic acid salt compositions characterised in claim 1 to 6, with optionally up to 50 equivalent percent of conventional chain lengthening agents and/or cross-linking agents, are used.

10. Use of the non-crystalline polyamine/carbonic acid adduct mixtures for the preparation of optionally foamed polyurethane ureas from

A) NCO prepolymers having an average of from 2 to 4 blocked aromatic and/or aliphatic and/or cycloaliphatic NCO groups ;
B) chain lengthening agents and/or cross-linking agents, and optionally
C) known auxiliary agents and additives,

characterised in that the non-crystalline polyamine/carbonic acid salt compositions characterised in claim 1 to 6 are used as component B).

## Revendications

1. Compositions non cristallines, liquides ou fluides de polyamines/sels d'acide carbonique, constituées de polyamines et de $CO_2$, caractérisées en ce qu'elles contiennent

1) des polyamines aliphatiques ou cycloaliphatiques comportant des groupes amino primaires et/ou secondaires ;
2) des hydroxyamines aliphatiques ou cycloaliphatiques comportant au moins un groupe hydroxy et au moins un groupe amino ;
dans le rapport quantitatif de 1) à 2) = 95 : 5 à 10 : 90 % en poids,
3) éventuellement des diluants sous forme de solvants organiques d'un point d'ébullition inférieur à 160 °C et d'une hydrosolubilité au moins partielle, en quantités allant jusqu'à 90 % de solvants dans le mélange total de 1) à 6),
4) éventuellement des substances auxiliaires et des additifs connus,
5) 0,01 mole à 5 moles d'eau par équivalent d'amine, la quantité d'eau devant atteindre au moins 1 mole d'eau par mole de $CO_2$,
et
6) 0,01 à 0,99 mole de $CO_2$ par équivalent d'amine.

2. Compositions de polyamines/sels d'acide carbonique suivant la revendication 1, caractérisées en ce qu'elles contiennent des polyamines aliphatiques ou cycloaliphatiques comportant 2 à 4 groupes amino primaires.
3. Compositions suivant les revendications 1 et 2, caractérisées en ce que, comme hydroxyamines 2), elles contiennent des mono- à tris-hydroxyalkylpolyamines.
4. Compositions suivant les revendications 1 à 3, caractérisées en ce qu'elles contiennent les polyamines 1) et les hydroxyamines 2) dans un rapport quantitatif de 80 : 20 à 25 : 75 % en poids.
5. Compositions suivant les revendications 1 à 4, caractérisées en ce qu'elles contiennent 0,1 à 1 mole d'eau par équivalent d'amine.
6. Compositions suivant les revendications 1 à 5, caractérisées en ce qu'elles contiennent 0,05 à 0,8 mole de $CO_2$ par équivalent d'amine et au moins 1 mole d'eau par mole de $CO_2$.
7. Procédé de préparation de compositions non cristallines, liquides ou fluides de polyamines/sels d'acide carbonique, constituées de polyamines et de $CO_2$, caractérisé en ce qu'on mélange

1) des polyamines aliphatiques ou cycloaliphatiques comportant des groupes amino primaires et/ou secondaires,
2) des hydroxyamines aliphatiques ou cycloaliphatiques comportant au moins un groupe hydroxy et au moins un groupe amino
dans un rapport quantitatif de 1) à 2) = 95 : 5 à 10 : 90 % en poids,
3) éventuellement en présence de diluants sous forme de solvants organiques d'un point d'ébullition inférieur à 160 °C et d'une hydrosolubilité au moins partielle en quantités allant jusqu'à 90 % en poids de solvants dans le mélange total de 1) à 6),
4) éventuellement en présence de substances auxiliaires et d'additifs connus en soi dans la chimie des polyuréthanes,
5) avec 0,01 à 5 moles d'eau par équivalent d'amine, la quantité d'eau devant atteindre au moins 1 mole d'eau par mole de $CO_2$,
et on ajoute
6) 0,01 à 0,99 mole de $CO_2$ par équivalent d'amine.

8. Procédé suivant la revendication 7, caractérisé en ce qu'on mélange

1) des amines primaires,

2) avec des mono- et di-(β-hydroxyalkyl)-alkylènediamines dans un rapport quantitatif de 80 : 20 à 25 : 75,

3) éventuellement en présence de diluants et

4) éventuellement en présence de substances auxiliaires et d'additifs connus en soi,

5) avec 0,1 à 1 mole d'eau par équivalent d'amine,

et on ajoute

6) 0,1 à 0,5 mole de $CO_2$ par équivalent d'amine.

9. Utilisation des compositions non cristallines de polyamines/sels d'acide carbonique pour la préparation de polyuréthane-urées éventuellement en mousse, à partir

A) de prépolymères de NCO comportant, en moyenne, 2 à 4 groupes NCO aromatiques et/ou aliphatiques et/ou cycloaliphatiques éventuellement bloqués, ces prépolymères ayant une teneur en NCO de 1 à 24 % en poids,

B) d'agents d'allongement de chaîne et/ou d'agents de réticulation, ainsi qu'éventuellement

C) de substances auxiliaires et d'additifs connus en soi,

caractérisée en ce que, comme composant B), on utilise les compositions non cristallines de polyamines/sels d'acide carbonique caractérisées dans les revendications 1 à 6, à raison d'au moins 50 % équivalents avec éventuellement, en plus, jusqu'à 50 % équivalents d'agents d'allongement de chaîne et/ou d'agents de réticulation habituels.

10. Utilisation des mélanges de produits d'addition non cristallins de polyamines/acide carbonique pour la préparation de polyuréthane-urées éventuellement en mousse à partir

A) de prépolymères de NCO comportant, en moyenne, 2 à 4 groupes NCO aromatiques et/ou aliphatiques et/ou cycloaliphatiques bloqués ;

B) d'agents d'allongement de chaîne et/ou d'agents de réticulation, ainsi qu'éventuellement

C) de substances auxiliaires et d'additifs connus en soi,

caractérisée en ce que, comme composant B), on utilise les compositions non cristallines de polyamines/sels d'acide carbonique caractérisées dans les revendications 1 à 6.